# EUROPÄISCHE PATENTSCHRIFT

(11) **EP 4 396 051 B1**
(45) Veröffentlichungstag und Bekanntmachung des Hinweises auf die Patenterteilung: **18.06.2025**
(21) Anmeldenummer: 22758229.3
(22) Anmeldetag: 01.08.2022
(51) Int. Cl.: B60T 13/38, B60T 17/22

(54) **ELEKTROPNEUMATISCHES BREMSSYSTEM, FAHRZEUG, VERFAHREN ZUM BETREIBEN EINES ELEKTROPNEUMATISCHEN BREMSSYSTEMS MIT EINER NOTLÖSE-VENTILEINHEIT, VERWENDUNG EINER NOTLÖSE-VENTILEINHEIT IN EINEM ELEKTROPNEUMATISCHEN BREMSSYSTEM**
ELECTROPNEUMATIC BRAKE SYSTEM, VEHICLE, METHOD FOR OPERATING AN ELECTROPNEUMATIC BRAKE SYSTEM WITH AN EMERGENCY-RELEASE VALVE UNIT, USE OF AN EMERGENCY-RELEASE VALVE UNIT IN AN ELECTROPNEUMATIC BRAKE SYSTEM
SYSTÈME DE FREINAGE ÉLECTROPNEUMATIQUE, VÉHICULE, PROCÉDÉ DEFONCTIONNEMENT D'UN SYSTÈME DE FREINAGE ÉLECTROPNEUMATIQUE COMPRENANT UNE UNITÉ DE SOUPAPE DE LIBÉRATION D'URGENCE, UTILISATION D'UNE UNITÉ DE SOUPAPE DE LIBÉRATION D'URGENCE DANS UN SYSTÈME DE FREINAGE ÉLECTROPNEUMATIQUE

(30) Priorität: 31.08.2021 DE 102021122499
(43) Veröffentlichungstag der Anmeldung: 10.07.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/071542
(87) Internationale Veröffentlichungsnummer: WO 2023/030798

(56) Entgegenhaltungen:
- DE-A1- 102019 131 110

## Beschreibung

Die Erfindung betrifft ein elektropneumatisches Bremssystem gemäß dem Oberbegriff des Anspruchs 1. Die Erfindung betrifft weiter ein Fahrzeug mit einem elektropneumatischen Bremssystem der vorstehend genannten Art, ein Verfahren zum Betreiben eines elektropneumatischen Bremssystems mit einer Notlöse-Ventileinheit und eine Verwendung einer Notlöse-Ventileinheit in einem elektropneumatischen Bremssystem.

Bei elektropneumatischen Bremssystemen für moderne Fahrzeuge sind Sicherheitskonzepte von hoher Relevanz. Insbesondere bei Fahrzeugen mit automatisierten oder teilautomatisierten Fahrfunktionen tragen Konzepte zum Auslösen einer Ausfallbremsung in einem Fehlerfall oder einem Stromausfall einer Steuereinheit signifikant zur Sicherheit des Fahrzeugs, dessen Insassen und weiterer Verkehrsteilnehmer bei. Derartige Konzepte ermöglichen ein sicheres Halten des Fahrzeugs in einem Fehlerfall oder Stromausfall.

Es bestehen bereits vorteilhaft derartige Konzepte, die eine Ausfallbremsung mittels eines Feststellbremssystems realisieren. Insbesondere erfolgt eine solche Ausfallbremsung durch ein Entlüften mindestens eines Federspeicherbremszylinders, was in einem Zuspannen des mindestens einen Federspeicherbremszylinders und einer entsprechenden Ausfallbremsung resultiert.

So beschreibt beispielsweise die DE 10 2019 131 930 A1 ein elektropneumatisches Feststellbremsmodul für ein elektronisch steuerbares pneumatisches Bremssystem für ein Fahrzeug mit einem Vorratsanschluss zum Empfangen eines Vorratsdrucks, wenigstens einem Feststellbremsanschluss zum Anschließen wenigstens eines Feststellbremszylinders, einer den Vorratsdruck empfangenden Hauptventileinheit, die dazu ausgebildet ist, in Abhängigkeit von einem Steuerdruck einen Federspeicherdruck an dem Feststellbremsanschluss auszusteuern, und einer den Vorratsdruck empfangenden Vorsteuerventilanordnung zum Bereitstellen des Steuerdrucks, wobei die Vorsteuerventilanordnung ein stromlos öffnendes Halteventil und ein Bistabilventil aufweist, das zwischen einer ersten Belüftungsstellung und einer zweiten Entlüftungsstellung umschaltbar ist. Gemäß dem in DE 10 2019 131 930 A1 offenbarten Ansatz kann durch das stromlos öffnende Halteventil in einem Fehlerfall oder Stromausfall durch ein selbsttätiges Entlüften des Steuerdrucks eine Ausfallbremsung erzeugt werden.

Die DE102019131110A1 betrifft ein Verfahren und eine Vorrichtung zum sicheren Notstoppen eines Nutzfahrzeugs mit einem elektronisch steuerbaren pneumatischen Bremssystem mit Federspeicherbremszylindern an wenigstens einer Achse, wobei das elektronisch steuerbare pneumatische Bremssystem ein Betriebsbremssystem und wenigstens ein erstes Redundanzsystem aufweist, wobei im Falle eines ersten Fehlers in dem Betriebsbremssystem das Fahrzeug durch das Redundanzsystem gebremst wird, wobei das elektronisch steuerbare Bremssystem ferner einen ungedrosselten Entlüftungspfad und einen gegenüber diesem gedrosselten Entlüftungspfad zum Entlüften der Federspeicherbremszylindern aufweist. Das Verfahren zeichnet sich durch die Schritte aus: Ermitteln eines zweiten Fehlers in dem Redundanzsystem, und in Antwort hierauf: automatisiertes gedrosseltes Entlüften von wenigstens einem der Federspeicherbremszylinder über den gedrosselten Entlüftungspfad zum langsamen, sicheren Stoppen des Fahrzeugs.

Problematisch ist weiterhin das Herstellen eines fahrbereiten Zustands eines Fahrzeugs nach einer erfolgten Ausfallbremsung. In der Regel muss hierzu ein Notlösedruck eingesteuert werden, um ein Belüften des mindestens einen zugespannten Federspeicherbremszylinders zu erreichen. Ein solches Einsteuern des Notlösedrucks erfordert in der Regel einen relativ hohen zeitlichen und/oder apparativen Aufwand und insbesondere einen manuellen Eingriff. Wünschenswert ist es daher, das Lösen eines Feststellbremssystems zu verbessern. Insbesondere soll das Bereitstellen eines Notlösedrucks in zuverlässiger Weise und unter geringem Aufwand ermöglicht werden.

An dieser Stelle setzt die Erfindung an, deren Aufgabe es ist, ein verbessertes elektropneumatisches Bremssystem anzugeben, das das verbesserte Bereitstellen eines Notlösedrucks ermöglicht.

Die Aufgabe wird durch die Erfindung in einem ersten Aspekt mit einem elektropneumatischen Bremssystem des Anspruchs 1 gelöst. Die Erfindung geht aus von einem elektropneumatischen Bremssystem für ein Fahrzeug, vorzugsweise ein Nutzfahrzeug, aufweisend ein Feststellbremssystem mit einer Feststell-brems-Ventileinheit, die zum Aussteuern eines Feststellbremsdrucks an wenigstens einem Federspeicheranschluss in Abhängigkeit eines Vorsteuerdrucks ausgebildet ist, wobei die Feststellbrems-Ventileinheit eine Vorsteuereinheit aufweist, die in Abhängigkeit eines elektronischen Feststellbremssignals den Vorsteuerdruck an einen Vorsteuerpfad aussteuert. Die Feststellbrems-Ventileinheit weist einen Zusatz-Bremsdruckanschluss auf, der pneumatisch mit dem Vorsteuerpfad verbunden oder verbindbar ist zum Einsteuern eines Notlösedrucks, wobei das Einsteuern des Notlösedrucks am Zusatz-Bremsdruckanschluss das Aussteuern des Feststellbremsdrucks am wenigstens einen Federspeicheranschluss bewirkt. Das elektropneumatische Bremssystem weist weiter eine erste Steuereinheit auf, die zum Bereitstellen des elektronischen Feststellbremssignals an die Feststellbrems-Ventileinheit ausgebildet ist.

Erfindungsgemäß ist das elektropneumatische Bremssystem dadurch gekennzeichnet, dass es eine Notlöse-Ventileinheit aufweist. Die Notlöse-Ventileinheit ist ausgebildet, einen von einem Betriebsbremssystem bereitgestellten, für eine Betriebsbremsung wirksamen Betriebsbremsdruck oder einen von dem Betriebsbremsdruck abgeleiteten Druck zu empfangen und in Abhängigkeit eines empfangenen elektronischen Notlöse-Signals einen Notlösedruck am Zusatz-Bremsdruckanschluss bereitzustellen.

Die Erfindung basiert auf der Erkenntnis, dass das Bereitstellen eines Notlösedrucks vorteilhaft ist zum Lösen der Federspeicherbremszylinder, insbesondere wenn das Fahrzeug nach einer erfolgten Ausfallbremsung durch das Feststellbremssystem bewegt werden soll. Die Erfindung schließt die Erkenntnis ein, dass das Bereitstellen des Notlösedrucks durch eine Notlöse-Ventileinheit, die ausgebildet ist, in Abhängigkeit eines empfangenen elektronischen Notlöse-Signals als Notlösedruck bereitzustellen, vorteilhaft in elektronisch gesteuerter Weise erfolgen kann. Auf diese Weise kann der sonst erforderliche manuelle Aufwand zum Bereitstellen des Notlösedrucks zum Lösen der Federspeicherbremszylinder reduziert, oder bevorzugt sogar vermieden werden.

Indem ein für eine Betriebsbremsung wirksamer Betriebsbremsdruck oder ein von dem Betriebsbremsdruck abgeleiteter Druck empfangen und zum Bereitstellen des Notlösedrucks genutzt wird, kann ein vom Feststellbremssystem unabhängiges System zum Bereitstellen des Notlösedrucks verwendet werden. Dies ist insbesondere vorteilhaft, wenn die erste Steuereinheit und/oder das Feststellbremssystem aufgrund eines Fehlerfalls oder Stromausfalls nicht verfügbar ist.

Durch das Nutzen des Betriebsbremsdrucks oder eines von dem Betriebsbremsdruck abgeleiteten Drucks wird weiter vorteilhaft erreicht, dass dieser Druck der Notlöse-Ventileinheit nur dann zur Verfügung gestellt werden kann, wenn auch das Betriebsbremssystem betätigt ist. So kann vorteilhaft sichergestellt werden, dass aufgrund einer einfachen Fehlfunktion, beispielsweise in einem Ventil der Notlöse-Ventileinheit, das Feststellbremssystem bzw. die Federspeicherbremszylinder nicht ungewollt gelöst werden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Besonders bevorzugt wird der Betriebsbremsdruck oder der von dem Betriebsbremsdruck abgeleitete Druck als Notlösedruck am Zusatz-Bremsdruckanschluss bereitgestellt. In anderen bevorzugten Weiterbildungen wird der Betriebsbremsdruck als Notlösedruck am Zusatz-Bremsdruckanschluss bereitgestellt, indem von einem Ventil, bevorzugt von einem pneumatisch gesteuerten Hauptventil, ein Vorratsdruck in Abhängigkeit des Betriebsbremsdrucks und/oder des elektronischen Notlöse-Signals als Notlösedruck am Zusatz-Bremsdruckanschluss ausgesteuert wird.

In einer bevorzugten Weiterbildung ist vorgesehen, dass das elektronische Notlöse-Signal von einer weiteren Steuereinheit bereitgestellt wird. Bevorzugt ist die Notlöse-Ventileinheit mit einem Betriebsbremssystem pneumatisch verbunden oder verbindbar. Besonders bevorzugt weist die Notlöse-Ventileinheit einen Betriebsbrems-Anschluss auf, der zum Empfangen eines Betriebsbremsdrucks mit einem Betriebsbremsdruck führenden Teil des Betriebsbremssystems, insbesondere einem Achsmodulator, verbindbar ist. Bevorzugt ist der Zusatz-Bremsdruckanschluss ein Notlöseanschluss. In anderen Weiterbildungen kann alternativ der Bremsdruckanschluss ein anderer Anschluss, vorzugsweise ein Anti-Compound-Anschluss sein.

In einer bevorzugten Weiterbildung ist vorgesehen, dass die weitere Steuereinheit eine dem Betriebsbremssystem zugeordnete Betriebsbrems-Steuereinheit ist. In derartigen Weiterbildungen wird vorteilhaft erreicht, dass die Notlöse-Ventileinheit angesteuert werden kann, wenn die dem Feststellbremssystem zugeordnete erste Steuereinheit ausgefallen ist. Ein solcher Ausfall der ersten Steuereinheit kann beispielsweise aufgrund eines Fehlerfalls und/oder eines Stromausfalls auftreten.

Die Erfindung wird dadurch weitergebildet, dass die erste Steuereinheit von einer ersten Energieversorgung mit elektrischer Energie versorgt wird, und die weitere Steuereinheit von einer zweiten Energieversorgung, die von der ersten Energieversorgung unabhängig ist, mit elektrischer Energie versorgt wird. In derartigen Weiterbildungen wird vorteilhaft erreicht, dass die Notlöse-Ventileinheit durch die weitere Steuereinheit auch dann noch angesteuert werden kann, wenn die erste Energieversorgung ausgefallen ist, beispielsweise weil ein zu einem Stromausfall führender Fehler in der ersten Energieversorgung und der ersten Steuereinheit aufgetreten ist. Bevorzugt weist die erste Energieversorgung eine erste Batterie auf und/oder die zweite Energieversorgung eine zweite Batterie auf. Besonders bevorzugt ist die erste Energieversorgung eine erste Batterie und/oder ist die zweite Energieversorgung eine zweite Batterie.

Im Rahmen einer bevorzugten Weiterbildung ist vorgesehen, dass die Notlöse-Ventileinheit einen Notlöse-Drucksensor aufweist, der ausgebildet ist zum Ermitteln des von der Notlöse-Ventileinheit bereitgestellten Notlösedrucks. Mittels eines Notlöse-Drucksensors kann vorteilhaft die Funktion der Notlöse-Ventileinheit überprüft werden. Bevorzugt ist der Notlöse-Drucksensor pneumatisch mit dem Hauptanschluss der Notlöse-Ventileinheit und/oder mit dem ersten Notlöse-Ventilanschluss verbunden. Vorzugsweise ist der Notlöse-Drucksensor zum Bereitstellen eines entsprechenden Notlösedrucksignals, bevorzugt an die weitere Steuereinheit, ausgebildet. Vorzugsweise ist der Notlöse-Drucksensor in der Notlöse-Ventileinheit und/oder dem Notlöse-Modul oder der Baueinheit angeordnet.

Vorteilhaft ist vorgesehen, dass die Vorsteuereinheit pneumatisch selbsthaltend ausgebildet ist. **In** einer bevorzugten Weiterbildung weist die Vorsteuereinheit ein Kompensationsventil zwischen einem Vorratspfad der Feststellbrems-Ventileinheit und dem Steuerpfad auf, das bevorzugt über einen Kompensations-Steueranschluss pneumatisch schaltbar ist, der pneumatisch mit dem Steuerpfad verbunden ist. **In** einer besonders bevorzugten Weiterbildung ist das Kompensationsventil gedrosselt und weist eine erste Drossel zwischen einem ersten Kompensationsventilanschluss und einem zweiten Kompensationsventilanschluss auf, und/oder eine zweite Drossel zwischen dem zweiten Kompensationsventilanschluss und einem dritten Kompensationsventilanschluss auf. Mittels einer pneumatisch selbsthaltenden Vorsteuereinheit, insbesondere mittels eines Kompensationsventils, kann vorteilhaft durch einen einmalig bzw. kurzzeitig eingesteuerten Notlösedruck ein Steueranschluss des pneumatisch betätigten Hauptventils dauerhaft belüftet werden, da durch das Kompensationsventil eine pneumatische Verbindung zwischen einem Vorratspfad und dem Steueranschluss hergestellt werden kann. Das Kompensationsventil wird bevorzugt über einen pneumatischen Kompensationssteuerpfad geschaltet. Auf diese Weise können die Federspeicherbremszylinder durch ein kurzes Einsteuern des Notlösedrucks, bevorzugt in Form eines Betriebsbremsdrucks, dauerhaft oder über einen längeren Zeitraum gelöst werden. Bevorzugt weist die Vorsteuereinheit ein erstes Vorsteuerventil auf, das ausgebildet ist, den Vorratspfad in steuerbarer Weise pneumatisch mit dem Vorsteuerpfad zu verbinden. Bevorzugt weist die Vorsteuereinheit ein zweites Vorsteuerventil auf, das ausgebildet ist, den Vorsteuerpfad in steuerbarer Weise pneumatisch mit einem Entlüftungsanschluss zu verbinden.

Im Rahmen einer bevorzugten Weiterbildung ist vorgesehen, dass die Notlöse-Ventileinheit ein 3/2-Wegeventil, bevorzugt ein 3/2-Wege-Magnetventil, aufweist. Das 3/2-Wegeventil weist einen ersten Notlöse-Ventilanschluss zum Bereitstellen des Notlösedrucks, einen zweiten Notlöse-Ventilanschluss zum Empfangen des Betriebsbremsdrucks oder des von dem Betriebsbremsdruck abgeleiteten Drucks, und einem dritten Notlöse-Entlüftungsanschluss auf. Das 3/2-Wegeventil ist ausgebildet, in einer ersten Notlöse-Ventilstellung den ersten Notlöse-Ventilanschluss pneumatisch mit dem zweiten Notlöse-Ventilanschluss zu verbinden, und in einer zweiten Notlöse-Ventilstellung den ersten Notlöse-Ventilanschluss pneumatisch mit dem Notlöse-Entlüftungsanschluss zu verbinden. Vorzugsweise ist der erste Notlöse-Ventilanschluss pneumatisch mit dem Zusatz-Bremsdruckanschluss verbindbar. Insbesondere ist in der ersten Notlöse-Ventilstellung der Notlöse-Entlüftungsanschluss gesperrt. Insbesondere ist in der zweiten Notlöse-Ventilstellung der zweite Notlöse-Ventilanschluss gesperrt. Besonders bevorzugt ist das 3/2-Wegeventil als ein Magnetventil ausgebildet, das in Abhängigkeit eines elektronischen Notlöse-Signals steuerbar ist.

Die Erfindung wird dadurch weitergebildet, dass die Notlöse-Ventileinheit eine Notlöse-Vorsteueranordnung aufweist, die in Abhängigkeit des elektronischen Notlöse-Signals den Betriebsbremsdruck oder den von dem Betriebsbremsdruck abgeleiteten Druck als Notlöse-Vorsteuerdruck aussteuert, und eine Notlöse-Hauptventilanordnung aufweist, die in Abhängigkeit des Notlöse-Vorsteuerdrucks einen Vorratsdruck als den Notlösedruck am Hauptanschluss aussteuert. Bevorzugt weist die Notlöse-Ventileinheit einen Vorratsanschluss zum Empfangen des Vorratsdrucks auf. Bevorzugt weist die Notlöse-Hauptventilanordnung ein pneumatisch schaltbares Hauptventil auf. Vorzugsweise ist das Hauptventil als 3/2-Wegeventil ausgebildet, mit einem ersten Hauptventilanschluss zum Bereitstellen des Notlösedrucks, einem zweiten Hauptventilanschluss zum Empfangen des Vorratsdrucks und einem dritten Hauptventil-Entlüftungsanschluss. Bevorzugt ist das Hauptventil ausgebildet, in einer ersten Hauptventil-Ventilstellung den ersten Hauptventilanschluss pneumatisch mit dem zweiten Hauptventilanschluss zu verbinden und besonders bevorzugt den Hauptventil-Entlüftungsanschluss zu sperren. Bevorzugt ist das Hauptventil ausgebildet, in einer zweiten Hauptventil-Ventilstellung den ersten Hauptventilanschluss pneumatisch mit dem Hauptventil-Entlüftungsanschluss zu verbinden und besonders bevorzugt den zweiten Hauptventilanschluss zu sperren.

Bevorzugt weist die Notlöse-Ventileinheit einen pneumatischen Selbsthaltepfad auf, der einen Hauptventil-Steueranschluss des Hauptventils mit dem Hauptanschluss der Notlöse-Ventileinheit und/oder einem ersten Hauptventilanschluss des Hauptventils pneumatisch verbindet. Mittels des pneumatischen Selbsthaltepfades kann vorteilhaft durch die Notlöse-Ventileinheit eine pneumatische Selbsthaltung erreicht werden, durch die ein kurzzeitig eingesteuerter Betriebsbremsdruck zu einem dauerhaften Bereitstellen eines Notlösedrucks führt. Auf diese Weise kann der mindestens eine Federspeicherbremszylinder nach einem einmaligen Einsteuern des Betriebsbremsdrucks oder der von dem Betriebsbremsdruck abgeleiteten Drucks dauerhaft gelöst werden.

Bevorzugt ist vorgesehen, dass die Notlöse-Vorsteueranordnung ein Vorsteuerventil aufweist, das mittels des elektronischen Notlöse-Signals steuerbar ist. Besonders bevorzugt ist das Vorsteuerventil als ein 2/2-Wegeventil, bevorzugt als ein 2/2-Wege-Magnetventil, ausgebildet.

Die Erfindung wird dadurch weitergebildet, dass die Notlöse-Vorsteueranordnung ein Halteventil aufweist, das zum selektiven Halten des Notlöse-Vorsteuerdrucks, insbesondere am Hauptventil-Steueranschluss, in Abhängigkeit des Notlöse-Signals ausgebildet ist. Bevorzugt ist das Vorsteuerventil als ein 3/2-Wegeventil, bevorzugt als ein 3/2-Wege-Magnetventil, ausgebildet. Vorzugsweise ist das Halteventil als ein 2/2-Wegeventil, bevorzugt als ein 2/2-Wege-Magnetventil ausgebildet. Vorzugsweise ist das Halteventil angeordnet und ausgebildet, den ausgesteuerten Notlöse-Vorsteuerdruck an einem Hauptventil-Steueranschluss des Hauptventils zu halten. Besonders bevorzugt umfasst das elektronische Notlöse-Signal ein erstes Notlöse-Signal für das Vorsteuerventil und/oder ein zweite Notlöse-Signal für das Halteventil.

Im Rahmen einer bevorzugten Weiterbildung ist vorgesehen, dass die Notlöse-Ventileinheit in der Feststellbrems-Ventileinheit angeordnet ist oder mit der Feststellbrems-Ventileinheit zu einer Baueinheit zusammengefasst ist oder als eigenständiges Notlöse-Modul ausgebildet ist.

In einem zweiten Aspekt gibt die Erfindung zur Lösung der Aufgabe weiterhin ein Fahrzeug an, das ein elektropneumatisches Bremssystem gemäß dem ersten Aspekt der Erfindung aufweist, wobei das elektropneumatische Bremssystem ein Betriebsbremssystem umfasst. In einer bevorzugten Weiterbildung weist das Fahrzeug, bevorzugt das elektropneumatische Bremssystem, eine weitere Steuereinheit zum Bereitstellen des elektronischen Notlöse-Signals auf.

In einer bevorzugten Weiterbildung ist vorgesehen, dass das Fahrzeug ein Zuggespann mit einem als Nutzfahrzeug ausgebildeten Zugfahrzeug und einem Anhänger ist, wobei das elektropneumatische Bremssystem eine erste Notlöse-Ventileinheit aufweist, die einer ersten Feststellbrems-Ventileinheit für einen Zugfahrzeug-Parkbremskreis des Zugfahrzeugs zugeordnet ist und in Abhängigkeit eines elektronischen Fahrzeug-Notlöse-Signals schaltbar ist, und eine zweite Notlöse-Ventileinheit aufweist, die einer zweiten Feststellbrems-Ventileinheit für einen Anhänger-Parkbremskreis des Anhängers zugeordnet ist und in Abhängigkeit eines elektronischen Anhänger-Notlöse-Signals schaltbar ist. Besonders bevorzugt werden das elektronische Fahrzeug-Notlöse-Signal und das elektronische Anhänger-Notlöse-Signal von der weiteren Steuereinheit bereitgestellt.

In einer bevorzugten Weiterbildung des Fahrzeugs ist vorgesehen, dass die erste Feststellbrems-Ventileinheit und die zweite Feststellbrems-Ventileinheit als eine gemeinsame, mehrkanalige Feststellbrems-Ventileinheit ausgebildet sind.

In einem dritten Aspekt gibt die Erfindung zur Lösung der Aufgabe weiterhin ein Verfahren zum Betreiben eines elektropneumatischen Bremssystems an, das die Schritte aufweist: Empfangen durch eine Notlöse-Ventileinheit eines für eine Betriebsbremsung wirksamen Betriebsbremsdrucks oder eines von dem Betriebsbremsdruck abgeleiteten Drucks; Bereitstellen eines elektronischen Notlöse-Signals; und Empfangen des elektronischen Notlöse-Signals durch die Notlöse-Ventileinheit; Bereitstellen eines Notlösedrucks durch die Notlöse-Ventileinheit in Abhängigkeit des empfangenen elektronischen Notlöse-Signals, der für wenigstens einen Federspeicherbremszylinder wirksam ist; Empfangen des Notlösedrucks durch eine Feststellbrems-Ventileinheit. In einer bevorzugten Weiterbildung des Verfahrens ist vorgesehen, dass das elektronische Notlöse-Signal durch eine weitere Steuereinheit bereitgestellt wird. In einer bevorzugten Weiterbildung des Verfahrens ist vorgesehen, dass die weitere Steuereinheit unterschiedlich von einer Steuereinheit ist, die der Feststellbrems-Ventileinheit zugeordnet ist. In einer bevorzugten Weiterbildung des Verfahrens ist vorgesehen, dass der Betriebsbremsdruck oder der von dem Betriebsbremsdruck abgeleitete Druck oder ein Vorratsdruck als Notlösedruck bereitgestellt wird.

In einem vierten Aspekt gibt die Erfindung zur Lösung der Aufgabe weiterhin eine Verwendung einer Notlöse-Ventileinheit in einem elektropneumatischen Bremssystem an, wobei das elektropneumatische Bremssystem ein Feststellbremssystem mit einer Feststellbrems-Ventileinheit aufweist, die zum Aussteuern eines Feststellbremsdrucks an wenigstens einem Federspeicheranschluss in Abhängigkeit eines Vorsteuerdrucks ausgebildet ist, wobei die Feststellbrems-Ventileinheit eine Vorsteuereinheit aufweist, die in Abhängigkeit eines elektronischen Feststellbremssignals den Vorsteuerdruck an einen Vorsteuerpfad aussteuert, wobei die Feststellbrems-Ventileinheit einen Zusatz-Bremsdruckanschluss aufweist, der pneumatisch mit dem Vorsteuerpfad verbunden oder verbindbar ist zum Einsteuern eines Notlösedrucks, wobei das Einsteuern des Notlösedrucks am Zusatz-Bremsdruckanschluss das Aussteuern des Feststellbremsdrucks am wenigstens einen Federspeicheranschluss bewirkt, und eine erste Steuereinheit aufweist, die zum Bereitstellen des elektronischen Feststellbremssignals an die Feststellbrems-Ventileinheit ausgebildet ist, wobei die Notlöse-Ventileinheit einen von einem Betriebsbremssystem bereitgestellten, für eine Betriebsbremsung wirksamen Betriebsbremsdruck oder einen von dem Betriebsbremsdruck abgeleiteten Druck empfängt und in Abhängigkeit eines empfangenen elektronischen Notlöse-Signals einen Notlösedruck am Zusatz-Bremsdruckanschluss bereitstellt. In einer bevorzugten Weiterbildung der Verwendung ist vorgesehen, dass das elektronische Notlöse-Signal von einer weiteren Steuereinheit bereitgestellt wird.

Es soll verstanden werden, dass das elektropneumatische Bremssystem gemäß dem ersten Aspekt der Erfindung, das Fahrzeug gemäß dem zweiten Aspekt der Erfindung, das Verfahren zum Betreiben eines elektropneumatischen Bremssystems gemäß dem dritten Aspekt der Erfindung und die Verwendung einer Notlöse-Ventileinheit in einem elektropneumatischen Bremssystem gemäß dem vierten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Vorzugsweise ist das elektropneumatische Bremssystem im Rahmen des Verfahrens gemäß dem dritten Aspekt der Erfindung und/oder im Rahmen der Verwendung gemäß dem vierten Aspekt der Erfindung gemäß wenigstens einer der vorstehend beschriebenen bevorzugten Weiterbildungen eines elektropneumatischen Bremssystems nach dem ersten Aspekt der Erfindung ausgebildet.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 ein Fahrzeug in Form eines Nutzfahrzeugs mit einer bevorzugten Ausführungsform eines elektropneumatischen Bremssystems,
Fig. 2 eine erste Ausführungsform einer Notlöse-Ventileinheit für ein elektropneumatisches Bremssystem gemäß dem ersten Aspekt der Erfindung,
Fig. 3 eine zweite Ausführungsform einer Notlöse-Ventileinheit für ein elektropneumatisches Bremssystem gemäß dem ersten Aspekt der Erfindung,
Fig. 4 eine dritte Ausführungsform einer Notlöse-Ventileinheit für ein elektropneumatisches Bremssystem gemäß dem ersten Aspekt der Erfindung,
Fig. 5 eine vierte Ausführungsform einer Notlöse-Ventileinheit für ein elektropneumatisches Bremssystem gemäß dem ersten Aspekt der Erfindung,
Fig. 6 eine erste Ausführungsform einer Feststellbrems-Ventileinheit für ein elektropneumatisches Bremssystem gemäß dem ersten Aspekt der Erfindung,
Fig. 7 eine zweite Ausführungsform einer Feststellbrems-Ventileinheit für ein elektropneumatisches Bremssystem gemäß dem ersten Aspekt der Erfindung, und in
Fig. 8 ein Fahrzeug in Form eines Zuggespanns mit einer weiteren bevorzugten Ausführungsform eines elektropneumatischen Bremssystems.

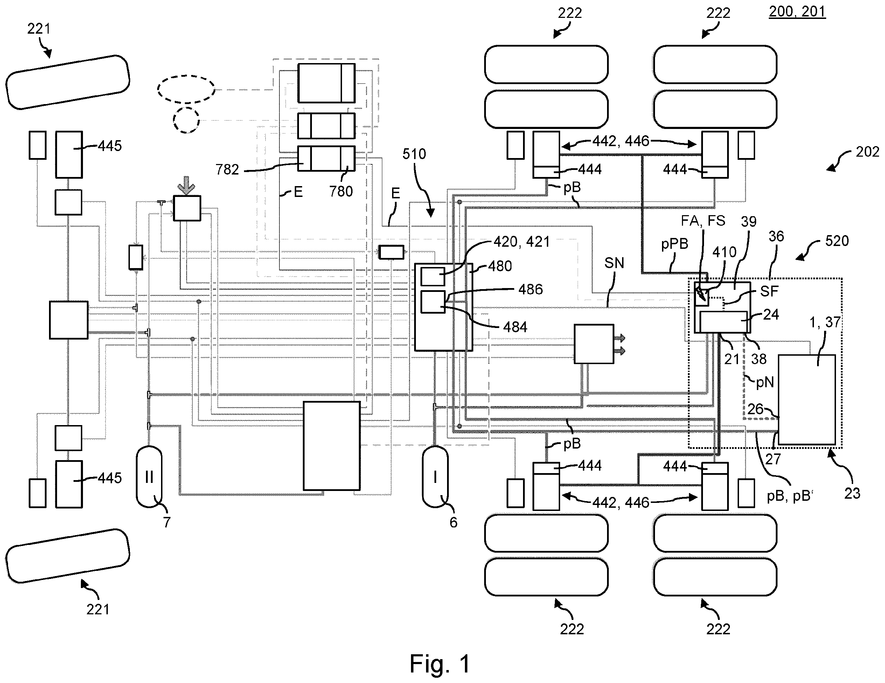

Fig. 1 zeigt schematisch ein Fahrzeug 200 in Form eines Nutzfahrzeugs 201 mit einer bevorzugten Ausführungsform eines elektropneumatischen Bremssystems 202. Das elektropneumatische Bremssystem 202 weist ein Betriebsbremssystem 510 und ein Feststellbremssystem 520 auf. Das Feststellbremssystem 520 weist eine Feststellbrems-Ventileinheit 24 mit mindestens einem Federspeicheranschluss 21 zum Bereitstellen eines Feststellbremsdrucks pPB an Federspeicherbremszylindern 442 auf. Vorliegend weist das Fahrzeug 200 vier Federspeicherbremszylinder 442 auf, die jeweils einem Hinterrad zugeordnet sind. Weiter weist das Betriebsbremssystem 510 zwei Betriebsbremszylinder 445 auf, die jeweils einem Vorderrad 221 zugeordnet sind.

Die Federspeicherbremszylinder 442 sind vorliegend als Kombinationsbremszylinder 446 ausgebildet, das heißt sie weisen jeweils eine Betriebsbremskammer 444 auf, welche dem Betriebsbremssystem 510 zugeordnet ist und mittels eines Betriebsbremsdrucks pB aktuierbar ist.

Zum Empfangen des Betriebsbremsdrucks pB sind die Betriebsbremskammern 444 jeweils mit einem Betriebsbremsdruck-Anschluss 486 eines Achsmodulators 484 pneumatisch verbunden. Das elektropneumatische Bremssystem 202 weist eine weitere Steuereinheit 420 auf, die als Betriebsbrems-Steuereinheit 421 zum Steuern des Betriebsbremssystems 510 ausgebildet ist. Vorliegend ist die weitere Steuereinheit 420 mit dem Achsmodulator 486 zwecks Ansteuerung signalführend verbunden.

Vorteilhaft sind wie hier gezeigt, der Achsmodulator 486 und die weitere Steuereinheit 420 baulich in einem Zentralmodul 480 integriert.

Das elektropneumatische Bremssystem 202 weist weiter eine Feststellbrems-Ventileinheit 24 auf, die ausgebildet ist zum Aussteuern des Feststellbremsdrucks pPB. Zum Bereitstellen des Feststellbremsdrucks pPB an die Federspeicherbremszylinder 442 weist die Feststellbrems-Ventileinheit 24 mindestens einen Federspeicheranschluss 21 auf, der pneumatisch mit den Federspeicherbremszylindern 442 verbunden ist.

Das elektropneumatische Bremssystem 202 weist eine erste Steuereinheit 410 auf, die zum Bereitstellen eines elektronischen Feststellbremssignals SF zwecks Ansteuerung signalführend mit der Feststellbrems-Ventileinheit 24 verbunden ist.

Indem der Feststellbremsdruck pPB in Abhängigkeit des elektronischen Feststellbremssignals SF am Federspeicheranschluss 21 ausgesteuert wird, werden die Federspeicherbremszylinder 442 belüftet, und eine hier nicht näher dargestellte Radbremse gelöst. Werden die Federspeicherbremszylinder 442 hingegen entlüftet, das heißt wenn der Feststellbremsdruck pPB unter einen Mindestwert absinkt, spannen die Federspeicherbremszylinder 442 zu und die Räder, hier die Hinterräder 222, werden durch die nicht näher dargestellten Radbremsen gebremst.

Ein solches Entlüften der Federspeicherbremszylinder 442 kann insbesondere bei einer Ausfallbremsung bzw. Notbremsung erfolgen. Ein solcher Fall tritt beispielsweise ein, wenn ein Ausnahmefehler FA oder Stromausfall FS in der ersten Steuereinheit 410 vorliegt. In einem solchen Fall lässt sich das Fahrzeug 200 nicht mehr ohne weiteres bewegen, da die Federspeicherbremszylinder 442 zugespannt sind und eine Belüftung durch die Feststellbrems-Ventileinheit 24 aufgrund des Ausfalls der ersten Steuereinheit 410 nicht möglich ist.

Ein Stromausfall FS liegt beispielsweise vor, wenn die erste Steuereinheit 410 nicht mehr mit elektrischer Energie E versorgt wird. Vorliegend ist die erste Steuereinheit 410 zwecks Versorgung mit elektrischer Energie E mit einer ersten Energieversorgung 780 elektrisch verbunden. Vorliegend ist die weitere Steuereinheit 420 zwecks Versorgung mit elektrischer Energie E mit einer zweiten Energieversorgung 782 elektrisch verbunden.

Das elektropneumatische Bremssystem 202 weist eine Notlöse-Ventileinheit 1 auf. Die Notlöse-Ventileinheit 1 ist ausgebildet, einen Notlösedruck pN an die Feststellbrems-Ventileinheit 24 bereitzustellen.

Die Notlöse-Ventileinheit 1 ist über einen Hauptanschluss 26, an dem der Notlösedruck pN ausgesteuert wird, mit einem Zusatz-Bremsdruckanschluss 38 in Form eines Notlöseanschlusses 84 der Feststellbrems-Ventileinheit 24 zum Bereitstellen des Notlösedrucks pN pneumatisch verbunden.

Die Notlöse-Ventileinheit 1 ist über einen Betriebsbrems-Anschluss 27 mit dem Betriebsbremssystem 510, vorliegend mit dem Achsmodulator 480, pneumatisch verbunden zum Empfangen des Betriebsbremsdrucks pB. In anderen Ausführungsformen kann der empfangene Druck ein vom Betriebsbremsdruck pB abgeleiteter Druck pB' sein.

Die Notlöse-Ventileinheit 1 ist vorliegend signalführend mit der weiteren Steuereinheit 420 zum Empfangen eines elektronischen Notlöse-Signals SN verbunden.

Die Feststellbrems-Ventileinheit 24 und die erste Steuereinheit 410 können, wie hier gezeigt, baulich integriert als ein Feststellbremsmodul 39 ausgebildet sein.

Die Notlöse-Ventileinheit 1 und das Feststellbremsmodul 39 können vorteilhaft, wie hier gestrichelt angedeutet, in einer Baueinheit 36 baulich integriert ausgebildet sein. In alternativen Ausführungsformen kann die Notlöse-Ventileinheit 1 als baulich eigenständiges Notlöse-Modul 37 ausgebildet sein.

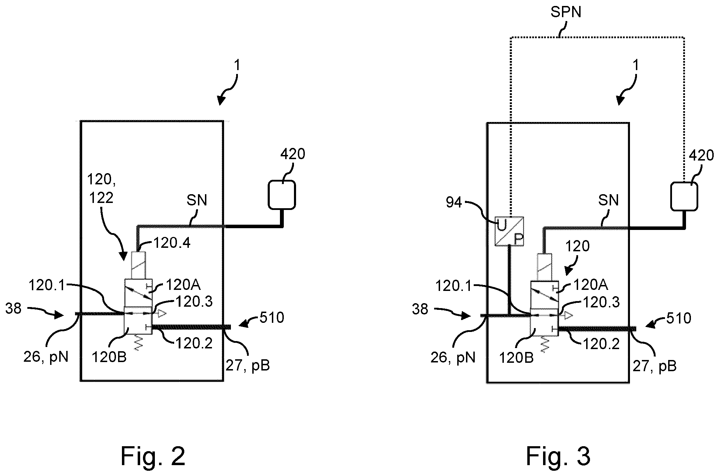

Fig. 2 zeigt eine erste Notlöse-Ventileinheit 1 für eine bevorzugte Ausführungsform eines elektropneumatischen Bremssystems. Vorliegend weist die Notlöse-Ventileinheit 1 ein 3/2-Wegeventil 120 in Form eines 3/2-Wege-Magnetventils 122 auf. Das 3/2-Wegeventil 120 weist einen ersten Notlöse-Ventilanschluss 120.1 auf, der mit einem Hauptanschluss 26 zum Bereitstellen des Notlösedrucks pN pneumatisch verbunden ist. Das 3/2-Wegeventil 120 weist einen zweiten Notlöse-Ventilanschluss 120.2 auf, der zum Empfangen des Betriebsbremsdrucks pB oder des von dem Betriebsbremsdruck pB abgeleiteten Drucks pB' pneumatisch mit einem Betriebsbrems-Anschluss 27 verbunden ist. Das 3/2-Wegeventil 120 weist einen dritten Notlöse-Entlüftungsanschluss 120.3 auf, der in eine Umgebung entlüftet. In einer ersten Notlöse-Ventilstellung 120A des 3/2-Wegeventils 120 ist der erste Notlöse-Ventilanschluss 120.1 pneumatisch mit dem zweiten Notlöse-Ventilanschluss 120.2 verbunden, um einen am Betriebsbrems-Anschluss 27 bereitgestellten Betriebsbremsdruck pB als Notlösedruck pN am Hauptanschluss 26 bereitzustellen. In einer zweiten Notlöse-Ventilstellung 120B ist der erste Notlöse-Ventilanschluss 120.1 pneumatisch mit dem Notlöse-Entlüftungsanschluss 120.3 verbunden, insbesondere um den Hauptanschluss 26 und mit diesem pneumatisch verbundene Anschlüsse zu entlüften.

Mittels einer weiteren Steuereinheit 420, die einem hier nicht dargestellten Betriebsbremssystem 510 zugeordnet sein kann, kann ein elektronisches Notlöse-Signal SN an einem elektronischen Steueranschluss 120.4 des 3/2-Wegeventils 120 bereitgestellt werden, um das 3/2-Wegeventil 120 in die erste Notlöse-Ventilstellung 120 zu schalten. Im nicht angesteuerten Zustand, das heißt wenn kein elektronisches Notlöse-Signal SN am Steueranschluss 120.4 anliegt, befindet sich das 3/2-Wegeventil 120 in der zweiten Notlöse-Ventilstellung 120B.

Fig. 3 zeigt eine zweite bevorzugte Ausführungsform einer Notlöse-Ventileinheit 1. Im Unterschied zu der in Fig. 2 gezeigten ersten Ausführungsformen der Notlöse-Ventileinheit 1 weist die zweite Notlöse-Ventileinheit 1 einen Notlöse-Drucksensor 94 auf, der pneumatisch mit dem Hauptanschluss 26 verbunden ist. Der Notlöse-Drucksensor 94 ist ausgebildet, den am ersten Notlöse-Ventilanschluss 120.1 ausgesteuerten Notlösedruck pN zu ermitteln, und in Abhängigkeit des ermittelten Notlösedrucks pN ein entsprechendes elektronisches Notlösedrucksignal SPN bereitzustellen. Vorliegend ist der Notlöse-Drucksensor 94 mit der weiteren Steuereinheit 420 signalführend verbunden, um das elektronische Notlösedrucksignal SPN an die weitere Steuereinheit 420 bereitzustellen.

In Ausführungsformen mit einem Notlöse-Drucksensor 94 kann vorteilhaft die Funktion der Notlöse-Ventileinheit 1, insbesondere des 3/2-Wegeventils 120, kontrolliert werden.

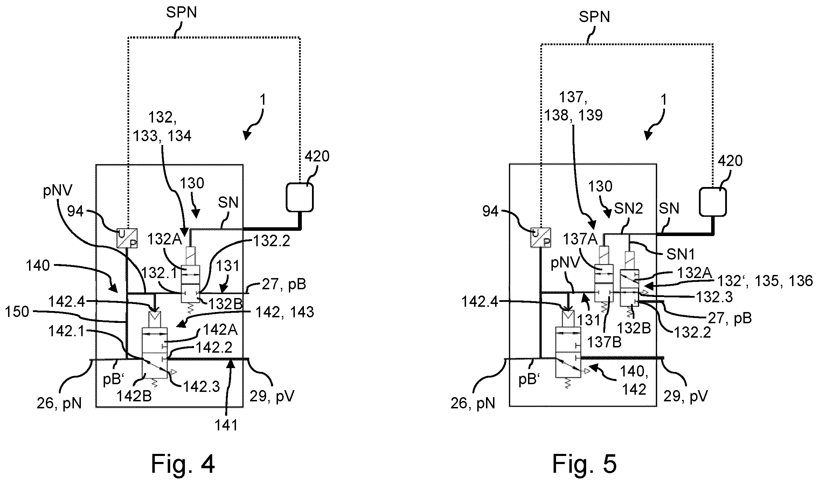

Fig. 4 zeigt eine dritte bevorzugte Ausführungsform einer Notlöse-Ventileinheit 1. Im Unterschied zu der in Fig. 3 gezeigten zweiten Ausführungsform der Notlöse-Ventileinheit 1 weist die hier gezeigte Notlöse-Ventileinheit 1 eine Notlöse-Vorsteueranordnung 130 und eine Notlöse-Hauptventilanordnung 140 auf. Die Notlöse-Vorsteueranordnung 130 umfasst ein Vorsteuerventil 132, das in einem Notlöse-Vorsteuerpfad 131 angeordnet ist und vorliegend als 2/2-Wegeventil 133 in Form eines 2/2-Wege-Magnetventils 134 ausgebildet ist. Das Vorsteuerventil 132 ist über ein elektronisches Notlöse-Signal SN steuerbar. Die Notlöse-Hauptventilanordnung 140 umfasst ein pneumatisch schaltbares Hauptventil 142, das als 3/2-Wegeventil 143 ausgebildet ist. Das pneumatisch schaltbare Hauptventil 142 weist einen Hauptventil-Steueranschluss 142.4 auf, der pneumatisch mit dem Notlöse-Vorsteuerpfad 131 zum Empfangen eines Notlöse-Vorsteuerdrucks pNV verbunden ist. Das Vorsteuerventil 132 ist im Notlöse-Vorsteuerpfad 131 zwischen dem Betriebsbrems-Anschluss 27 und dem Hauptventil-Steueranschluss 142.4 angeordnet.

**In** einer ersten Ventilstellung 132A des Vorsteuerventils 132 ist ein mit dem Betriebsbrems-Anschluss 27 verbundener zweiter Vorsteuerventil-Anschluss 132.2 pneumatisch mit einem, mit dem Hauptventil-Steueranschluss 142.4 verbundenen, ersten Vorsteuerventil-Anschluss 132.1 verbunden, um den Betriebsbremsdruck pB als Notlöse-Vorsteuerdruck pNV am Hauptventil-Steueranschluss 142.4 bereitzustellen. **In** einer zweiten Ventilstellung 132B des Vorsteuerventils 132 ist der Betriebsbrems-Anschluss 27 pneumatisch von dem Hauptventil-Steueranschluss 142.4 getrennt. Das Vorsteuerventil 132 ist ausgebildet, in Abhängigkeit des elektronischen Notlöse-Signals SN in die erste Ventilstellung 132A zu schalten.

Die Notlöse-Ventileinheit 1 weist zusätzlich einen Vorratsanschluss 29 auf zum Empfangen eines Vorratsdrucks pV.

Die Notlöse-Hauptventilanordnung 140 weist einen Hauptpfad 141 auf, der den Vorratsanschluss 29 pneumatisch mit dem Hauptanschluss 26 verbindet und in dem das Hauptventil 142 angeordnet ist. Das Hauptventil 142 ist vorliegend als 3/2-Wegeventil 143 ausgebildet. Das Hauptventil 142 umfasst einen ersten Hauptventilanschluss 142.1, der zum Bereitstellen des Notlösedrucks pN pneumatisch mit dem Hauptanschluss 26 verbunden ist. Das Hauptventil 142 umfasst einen zweiten Hauptventilanschluss 142.2, der zum Empfangen des Vorratsdrucks pV pneumatisch mit dem Vorratsanschluss 29 verbunden ist. Das Hauptventil 142 umfasst einen dritten Hauptventil-Entlüftungsanschluss 142.3, der in die Umgebung entlüftet. In einer ersten Hauptventil-Ventilstellung 142A des Hauptventils 142 ist der erste Hauptventilanschluss 142.1 pneumatisch mit dem zweiten Hauptventilanschluss 142.2 verbunden, und bevorzugt der Hauptventil-Entlüftungsanschluss 142.3 gesperrt. In der ersten Hauptventil-Ventilstellung 142A wird somit der Vorratsdruck pV als Notlösedruck pN am Hauptanschluss 26 bereitgestellt.

In einer zweiten Hauptventil-Ventilstellung 142B des Hauptventils 140 wird der erste Hauptventilanschluss 142.1 pneumatisch mit dem Hauptventil-Entlüftungsanschluss 142.3 verbunden und bevorzugt der zweite Hauptventilanschluss 142.2 gesperrt. In der zweiten Hauptventil-Ventilstellung 142B ist folglich der Vorratsanschluss 29 pneumatisch von dem Hauptanschluss 26 getrennt.

Das Hauptventil 142 ist derart pneumatisch über das Vorsteuerventil 132 steuerbar, dass wenn durch das Vorsteuerventil 132 in seiner ersten Ventilstellung 132A ein Notlöse-Vorsteuerdruck pNV am Hauptventil-Steueranschluss 142.4 ausgesteuert wird, das Hauptventil 142 in die erste Hauptventil-Schaltstellung 142A schaltet.

Die Notlöse-Ventileinheit 1 weist weiterhin einen pneumatischen Selbsthaltepfad 150 auf, der den ersten Hauptventilanschluss 142.1 pneumatisch mit dem Hauptventil-Steueranschluss 142.4 verbindet. Mittels des pneumatischen Selbsthaltepfads 150 kann vorteilhaft der vom Hauptventil 142 am ersten Hauptventilanschluss 142.1 ausgesteuerte Notlösedruck pN als Notlöse-Vorsteuerdruck pNV am Hauptventil-Steueranschluss 142.4 bereitgestellt werden, und zwar vorteilhaft unabhängig von dem am Betriebsbrems-Anschluss 27 bereitgestellten Betriebsbremsdruck pB. Mit einem pneumatischen Selbsthaltepfad 150 ist es vorteilhaft möglich, bei einem einmaligen, insbesondere kurzzeitigen, Bereitstellen des Betriebsbremsdrucks pB am Hauptventil-Steueranschluss 142.4, anschließend dauerhaft den Notlösedruck pN am Hauptanschluss auszusteuern, auch wenn der Betriebsbremsdruck pB nicht mehr bereitgestellt wird.

In Fig. 5 ist eine weitere bevorzugte, vierte Ausführungsform einer Notlöse-Ventileinheit 1 dargestellt. Die Notlöse-Ventileinheit 1 unterscheidet sich von der in Fig. 4 dargestellten Notlöse-Ventileinheit 1 dadurch, dass die Notlöse-Vorsteueranordnung 130 ein weiteres Vorsteuerventil 132' in Form eines 3/2-Wegeventils 135 und zusätzlich ein Halteventil 137 aufweist. Das weitere Vorsteuerventil 132' und das Halteventil 137 sind pneumatisch in Reihe im Notlöse-Vorsteuerpfad 131 angeordnet. Das weitere Vorsteuerventil 132' ist vorliegend in Form eines 3/2-Wege-Magnetventils 136 ausgebildet und über ein erstes elektronisches Notlöse-Signal SN1 steuerbar. Das weitere Vorsteuerventil 132' weist im Unterschied zu dem in Fig. 4 gezeigten Vorsteuerventil 132 zusätzlich einen Entlüftungsanschluss 132.3 auf, der in der ersten Ventilstellung 132A pneumatisch mit dem ersten Vorsteuerventilanschluss 132.1 verbunden ist.

Das Halteventil 137 ist vorliegend in Form eines 2/2-Wegeventils 138, nämlich in Form eines 2/2-Wege-Magnetventils 139 und über ein zweites elektronisches Notlöse-Signal SN2 steuerbar. Das Halteventil 137 weist eine erste Ventilstellung 137A auf, in der das Halteventil 137 pneumatisch geöffnet ist, das heißt den Hauptventil-Steueranschluss 142.4 mit dem Vorsteuerventil 132 pneumatisch verbindet. Das Halteventil 137 weist eine zweite Ventilstellung 137B auf, in der das Halteventil 137 den Hauptventil-Steueranschluss 142.4 von dem Vorsteuerventil 132 pneumatisch trennt.

Mittels der hier gezeigten Notlöse-Vorsteueranordnung 130 mit einem als 3/2-Wegeventil 135 ausgebildeten Vorsteuerventil 132 und einem Halteventil 137 kann vorteilhaft ein am Hauptventil-Steueranschluss 142.4 anliegender Notlöse-Vorsteuerdruck pNV steuerbar entlüftet werden, um ein Aussteuern des Notlösedrucks pN am Hauptanschluss 26 zu beenden. Hierzu wird vorteilhaft das Halteventil 137 in die erste Ventilstellung 137A und das Vorsteuerventil 132 in die zweite Ventilstellung 132B geschaltet, damit der Hauptventil-Steueranschluss 142.4 über den Entlüftungsanschluss 132.3 entlüftet wird.

Mittels eines Vorratsdrucks pV versorgte Notlöse-Ventileinheiten 1, insbesondere die in Fig. 4 gezeigte, dritte Notlöse-Ventileinheit 1 und die in Fig. 5 gezeigte vierte Notlöse-Ventileinheit 1 ermöglichen vorteilhaft eine dauerhafte Aussteuerung eines Notlösedruck pN, und zwar insbesondere auch dann, wenn der Betriebsbremsdruck pB nicht mehr am Betriebsbrems-Anschluss 27 anliegt.

Gemäß den in Fig. 4 und Fig. 5 gezeigten Notlöse-Ventileinheiten 1 wird nicht der Betriebsbremsdruck pB direkt als Notlösedruck pN bereitgestellt, sondern ein vom Betriebsbremsdruck pB abgeleiteter Druck pB' in Form des Vorratsdrucks pV, der in Abhängigkeit des am Betriebsbrems-Anschluss 27 ausgesteuerten Betriebsbremsdrucks pB bereitgestellt wird.

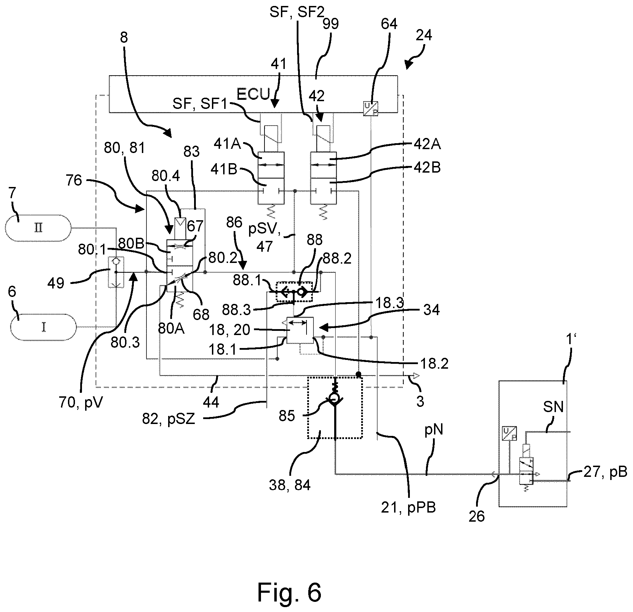

Fig. 6 zeigt eine bevorzugte Feststellbrems-Ventileinheit 24 für ein elektropneumatisches Bremssystem 202. Eine Notlöse-Ventileinheit 1, hier die in Fig. 3 gezeigte zweite Ausführungsform einer Notlöse-Ventileinheit 1, ist über ihren Hauptanschluss 26 zum Bereitstellen des Notlösedrucks pN mit einem Zusatz-Bremsdruckanschluss 38 der Feststellbrems-Ventileinheit 24 verbunden. Der Zusatz-Bremsdruckanschluss 38 ist vorliegend als Notlöseanschluss 84 ausgebildet.

Die Feststellbrems-Ventileinheit 24 weist einen Vorratsdruckpfad 70 auf. Die Feststellbrems-Ventileinheit 24 ist ausgebildet, in Abhängigkeit von einem elektronischen Feststellbremssignal SF einen Feststellbremsdruck pBP an wenigstens einem Federspeicheranschluss 21 auszusteuern.

Der Vorratsdruckpfad 70 ist zum Empfangen eines Vorratsdrucks pV über ein Vorrats-Wechselventil 49 mit einem ersten Druckluftvorrat 6 und einem zweiten Druckluftvorrat 7 pneumatisch verbunden. Das Vorrats-Wechselventil 49 ist als Select-High-Wechselventil ausgebildet, sodass derjenige des ersten Druckluftvorrats 6 und des zweiten Druckluftvorrats 7 mit dem Vorratsdruckpfad 70 verbunden wird, in dem der höhere Vorratsdruck pV herrscht, und der jeweils andere Druckluftvorrat 6, 7 gesperrt wird.

Der Vorratsdruckpfad 70 ist in einen Vorratszweig 74, einen Steuerzweig 76 und einen Kompensationspfad 86 geteilt. Der Kompensationspfad 86 verbindet den Vorratsdruckpfad 70 pneumatisch mit einem Vorsteuerpfad 47.

In dem Kompensationspfad 86 ist ein Kompensationsventil 80 angeordnet. Das Kompensationsventil 80 ist als 3/2-Wegeventil 81 ausgebildet. Das Kompensationsventil 80 weist einen ersten Kompensationsventilanschluss 80.1 auf, der mit dem Vorratsdruckpfad 70 pneumatisch verbunden ist. Das Kompensationsventil 80 weist einen zweiten Kompensationsventilanschluss 80.2 auf, der pneumatisch mit dem Kompensationspfad 86 verbunden ist. Das Kompensationsventil 80 weist einen dritten Kompensationsventilanschluss 80.3 auf, der pneumatisch mit einer Entlüftungsleitung 44 verbunden ist. Die Entlüftungsleitung 44 ist mit einem Entlüftungsanschluss 3 verbunden, der in die Umgebung entlüftet.

Das Kompensationsventil 80 weist einen Kompensationsventil-Steueranschluss 80.4 auf, der mittels eines Kompensationssteuerpfades 83 pneumatisch mit dem zweiten Kompensationsventilanschluss 80.2 verbunden ist. Mittels des Kompensationssteuerpfades 83 wird bevorzugt eine pneumatische Ansteuerung realisiert. Über den Kompensationssteuerpfad 83 wird ein am zweiten Kompensationsventilanschluss 80.2 anliegender Druck, insbesondere ein Vorsteuerdruck pSV, am Kompensationsventil-Steueranschluss 80.4 bereitgestellt.

In einer zweiten Schaltstellung 80B des Kompensationsventils 80 ist der erste Kompensationsventilanschluss 80.1 pneumatisch mit dem zweiten Kompensationsventilanschluss 80.2 verbunden, und bevorzugt ist der dritte Kompensationsventilanschluss 80.3 gesperrt. In der zweiten Schaltstellung 80B ist somit der Vorratsdruckpfad 70 mit dem Kompensationspfad 86 und somit mit dem Vorsteuerpfad 47 pneumatisch verbunden. In einer ersten Schaltstellung 80A des Kompensationsventils 80 ist der zweite Kompensationsventilanschluss 80.2 pneumatisch mit dem dritten Kompensationsventilanschluss 80.3 verbunden, und bevorzugt ist der erste Kompensationsventilanschluss 80.1 gesperrt. In der ersten Schaltstellung 80A ist somit der Kompensationspfad 86 und somit ist der Vorsteuerpfad 47 mit dem Entlüftungsanschluss 3 pneumatisch verbunden.

Vorliegend weist das Kompensationsventil 80 zwischen dem ersten Kompensationsventilanschluss 80.1 und dem zweiten Kompensationsventilanschluss 80.2 eine erste Drossel 67 auf. Die erste Drossel 67 weist vorteilhaft eine Nennweite auf, die im Vergleich zum Kompensationspfad 86 und/oder zum Vorratsdruckpfad 70 geringer ist. Vorliegend weist das Kompensationsventil 80 zwischen dem zweiten Kompensationsventilanschluss 80.2 und dem dritten Kompensationsventilanschluss 80.3 eine zweite Drossel 68 auf. Die zweite Drossel 68 weist vorteilhaft eine Nennweite auf, die im Vergleich zum Kompensationspfad 86 und/oder zur Entlüftungsleitung 44, geringer ist.

Wenn das Kompensationsventil 80 über den Kompensationssteuerpfad 83 in die zweite Schaltstellung 80B geschaltet ist, wird über den Kompensationssteuerpfad 83 der Vorratsdruck pV am Kompensationsventil-Steueranschluss 80.4 bereitgestellt, um das Kompensationsventil 80 in der zweiten Schaltstellung 80B zu halten. In diesem Zustand wird ein einmalig über den Zusatz-Bremsdruckanschluss 38 eingesteuerter und durch das Rückschlagventil 85 im Vorsteuerpfad 47 gehaltener Notlösedruck pN bzw. Vorsteuerdruck pSV gehalten. Wenn bei Leckagen im Vorsteuerpfad 47 ein Druckabfall auftreten sollte, wird in kompensierender Weise der Vorratsdruck pV über das Kompensationsventil 80, insbesondere über die Drossel 27, nachgeführt.

Vorliegend weist die Feststellbrems-Ventileinheit 24 eine Hauptventileinheit 34 auf. Die Hauptventileinheit 34 umfasst eine Vorsteuereinheit 8 und ein pneumatisch betätigtes Hauptventil 18. Die Vorsteuereinheit 8 ist ausgebildet, in Abhängigkeit des elektronischen Feststellbremssignals SF einen Vorsteuerdruck pSV an einem Steueranschluss 18.3 des pneumatisch betätigten Hauptventils 18 bereitzustellen. Das pneumatisch betätigte Hauptventil 18 ist ausgebildet, in Abhängigkeit dieses Parkbremssteuerdrucks pPS an einem Hauptanschluss 18.2 den Feststellbremsdruck pBP auszusteuern, der an dem Federspeicheranschluss 21 bereitgestellt wird. Das pneumatisch betätigte Hauptventil 18 ist vorliegend als Relaisventil 20 ausgebildet.

Die Vorsteuereinheit 8 weist ein erstes Vorsteuerventil 41 und ein zweites Vorsteuerventil 42 auf, die jeweils als 2/2-Wege-Magnetventile ausgebildet sind. Mittels des ersten Vorsteuerventils 41 kann in einer Öffnungsstellung 41A der Vorratsdruck pV vom Vorratsdruckpfad 70 als Vorsteuerdruck pSV an den Vorsteuerpfad 47 bereitgestellt werden. Der Vorsteuerpfad 47 ist zwischen dem ersten Vorsteuerventil 41 und dem zweiten Vorsteuerventil 42 angeordnet und pneumatisch mit dem Steueranschluss 18.3 des Hauptventils 18 verbunden oder verbindbar. Mittels des zweiten Vorsteuerventils 42 kann der Vorsteuerdruck pSV im Vorsteuerpfad 47 gehalten werden, oder der Vorsteuerpfad 47 in steuerbarer Weise entlüftet werden.

Durch das Schalten des ersten Vorsteuerventils 41 in eine Sperrstellung 41B kann der Vorsteuerdruck pSV im Vorsteuerpfad 47, insbesondere am Steueranschluss 18.3, zur dauerhaften Betätigung eingefangen bzw. gehalten werden. Dabei ist das zweite Vorsteuerventil 42 ebenfalls in einer Sperrstellung 42B. Entsprechend des Aufbaus der Vorsteuereinheit 8 mit einem ersten Vorsteuerventil 41 und einem zweiten Vorsteuerventil 42 umfasst das elektronische Feststellbremssignal SF ein erstes elektronisches Feststellbremssignal SF1 zum Ansteuern des ersten Vorsteuerventils 41 und ein zweites elektronisches Feststellbremssignal SF2 zum Ansteuern des zweiten Vorsteuerventils 42. Durch ein Schalten des zweiten Vorsteuerventils 42 in eine Öffnungsstellung 42A kann der Vorsteuerpfad 47 zum Entlüften des Steueranschlusses 18.3 mit der Entlüftungsleitung 44 pneumatisch verbunden werden.

Der Vorsteuerpfad 47 ist zusätzlich mit einem Zusatz-Bremsdruckanschluss 38 und/oder mit einem Anti-Compound-Anschluss 82 pneumatisch verbindbar. Mittels des Zusatz-Bremsdruckanschlusses 38 kann der Notlösedruck pN an den Vorsteuerpfad 47 und insbesondere an den Steueranschluss 18.3 bereitgestellt werden, um unabhängig von der Vorsteuereinheit 8 am Federspeicheranschluss 21 einen Feststellbremsdruck pBP auszusteuern. Insbesondere kann mittels des Zusatz-Bremsdruckanschlusses 38 bei einem Ausfall des Bremssystems 202 oder dergleichen Fehlerfall, der zu einem Entlüften der Federspeicherbremszylinder 442 führt, eine Bewegungsfähigkeit des Nutzfahrzeugs 201 kontrolliert hergestellt werden. Vorteilhaft ist an dem Zusatz-Bremsdruckanschluss 38 ein Rückschlagventil 85 angeordnet, welches in Richtung des Steueranschlusses 18.3 öffnet und in die Gegenrichtung sperrt. Mittels des Rückschlagventils 85 kann vorteilhaft ein unkontrolliertes Entweichen des Vorsteuerdrucks pSV über den Zusatz-Bremsdruckanschluss 38 vermieden werden. Auch kann mittels des Rückschlagventils 85 ein einmalig eingesteuerter Notlösedruck pN dauerhaft im Vorsteuerpfad 47 eingefangen bzw. gehalten werden zum dauerhaften Belüften des Federspeicheranschlusses 21 und somit zum Lösen mindestens eines Feststellbremszylinders.

Mittels des Anti-Compound-Anschlusses 82 kann ein Zusatz-Feststellbremsdruck pSZ an den Vorsteuerpfad 47 und insbesondere an den Steueranschluss 18.3 bereitgestellt werden, um unabhängig von der Vorsteuereinheit 8 am Federspeicheranschluss 21 einen Feststellbremsdruck pBP auszusteuern. Insbesondere kann der Zusatz-Feststellbremsdruck pSZ von einer hier nicht dargestellten Betriebsbremsfunktion bereitgestellt werden, um eine Anti-Compound-Funktion zu realisieren.

Die elektropneumatische Ventilanordnung 1 weist weiter vorteilhaft ein im Vorsteuerpfad 47 angeordnetes Auswahlventil 88 auf, welches als Select-High-Ventil ausgebildet ist. Das Auswahlventil 88 weist einen ersten Auswahlventilanschluss 88.1 auf, der mit dem Anti-Compound-Anschluss 82 verbunden ist, einen zweiten Auswahlventilanschluss 88.2, der mit dem Zusatz-Bremsdruckanschluss 38 verbunden ist und einen dritten Auswahlventilanschluss 88.3, der mit dem Steueranschluss 18.3 verbunden ist. Das Auswahlventil 88 ist ausgebildet, denjenigen von dem ersten Auswahlventilanschluss 88.1 und dem zweiten Auswahlventilanschluss 88.2 mit dem dritten Auswahlventilanschluss 88.3 zu verbinden, an dem der höhere Druck anliegt.

Die elektropneumatische Ventilanordnung 1 weist einen Drucksensor 64 auf, der pneumatisch mit dem Federspeicheranschluss 21 verbunden ist zum Ermitteln des Feststellbremsdrucks pBP.

Die elektropneumatische Ventilanordnung 1 weist eine elektronische Steuereinheit 99 auf, welche signal- und/oder energieführend mit den elektronischen Komponenten der elektropneumatischen Ventilanordnung 1 verbunden sind. Insbesondere sind vorliegend das erste Vorsteuerventil 41 und das zweite Vorsteuerventil 42 zum Ansteuern elektrisch mit der elektronischen Steuereinheit 99 verbunden. Auch ist der Drucksensor 64 elektrisch mit der elektronischen Steuereinheit 99 verbunden.

Eine derartige Feststellbrems-Ventileinheit 24 wie hier dargestellt ist besonders bevorzugt für einen Einsatz mit der ersten Notlöse-Ventileinheit 1 oder der zweiten Notlöse-Ventileinheit 1 geeignet, da aufgrund des Kompensationsventil 80 ein einmalig als Notlösedruck pN eingesteuerter Feststellbremsdruck pB zu einem dauerhaften Aussteuern eines Feststellbremsdrucks pPB am Federspeicheranschluss 21 führt.

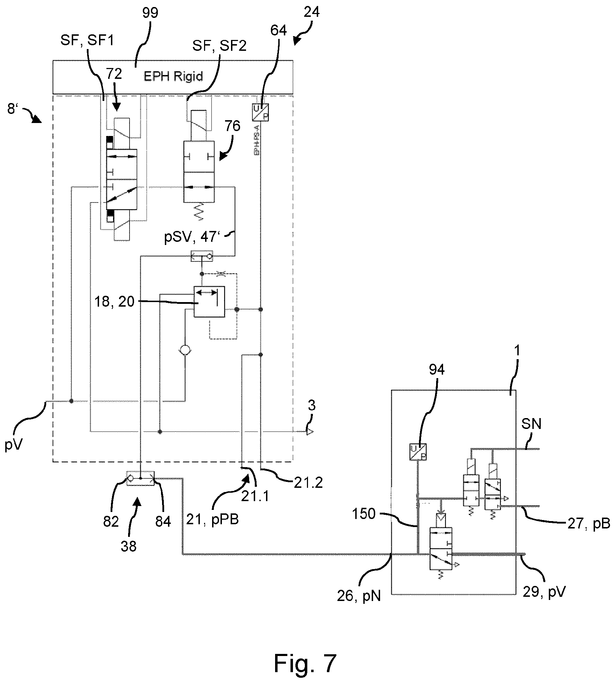

Fig. 7 zeigt eine zweite Feststellbrems-Ventileinheit 24. Die zweite Feststellbrems-Ventileinheit 24 weist im Unterschied zu der ersten Feststellbrems-Ventileinheit 24 kein Kompensationsventil 80 auf, und weist eine weitere Vorsteuereinheit 8' mit einem weiteren Vorsteuerpfad 47' auf. Die weitere Vorsteuereinheit 8' unterscheidet sich von der in Fig. 6 gezeigten Vorsteuereinheit 8 dadurch, dass sie ein Bistabilventil 72 aufweist, über das sowohl die Belüftung als auch die Entlüftung des weiteren Vorsteuerpfades 47' erfolgt. Die weitere Vorsteuereinheit 8' weist weiterhin ein, mit dem Bistabilventil 72 pneumatisch im weiteren Vorsteuerpfad 47' in Reihe geschaltetes, Vorsteuer-Halteventil 76 auf. mit dem Vorsteuer-Halteventil 76 kann der Vorsteuerdruck pSV am Steueranschluss 18.3 des pneumatisch betätigten Hauptventils 18 gehalten werden.

Die zweite Feststellbrems-Ventileinheit 24 ist bevorzugt für einen Einsatz mit einer Notlöse-Ventileinheit 1 geeignet, die eine dauerhafte Aussteuerung eines Notlösedrucks pN ermöglicht, besonders bevorzugt mit der dritten Notlöse-Ventileinheit 1 oder der vierten Notlöse-Ventileinheit 1. Da die zweite Feststellbrems-Ventileinheit 24 nicht über ein Kompensationsventil 80 oder dergleichen pneumatische Haltefunktion verfügt, kann stattdessen eine Notlöse-Ventileinheit 1 mit einem Selbsthaltepfad 150 diese pneumatische Haltefunktion vorteilhaft zur Verfügung stellen.

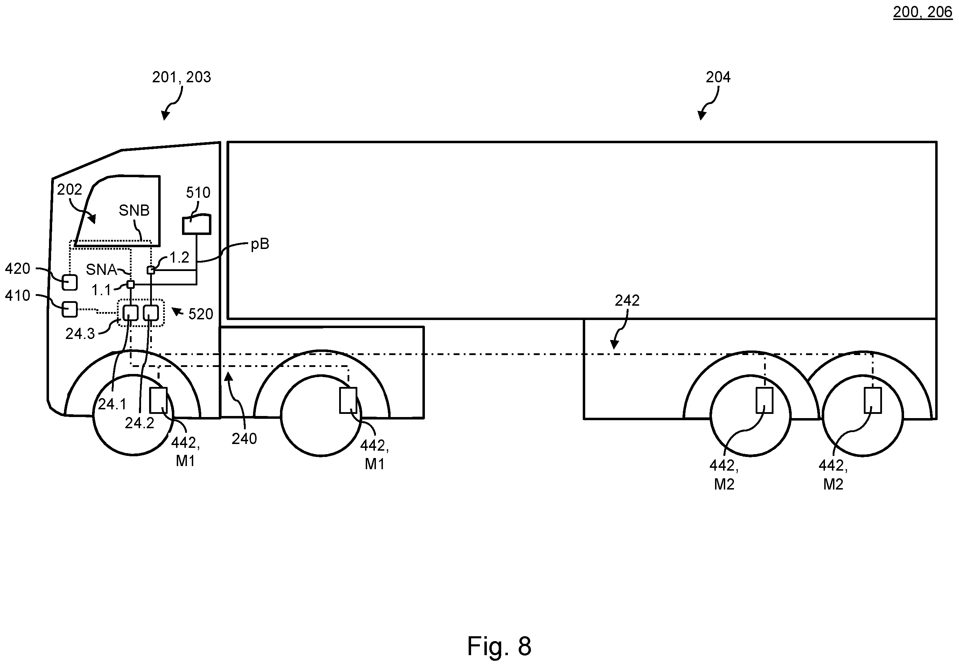

Fig. 8 zeigt ein Fahrzeug 200 in Form eines Zuggespanns 206 mit einem als Nutzfahrzeug 201 ausgebildeten Zugfahrzeugs 203 und einem von diesem gezogenen Anhänger 204.

Das Fahrzeug 200 weist ein elektropneumatisches Bremssystem 202 gemäß der Erfindung auf, mit einer ersten Notlöse-Ventileinheit 1.1, die einer ersten Feststellbrems-Ventileinheit 24.1 zugeordnet ist und einer zweiten Notlöse-Ventileinheit 1.2, die einer zweiten Feststellbrems-Ventileinheit 24.2 zugeordnet ist. Die erste Feststellbrems-Ventileinheit 24.1 ist einer ersten Anzahl M1 von Federspeicherbremszylindern 442 zugeordnet, die im Zugfahrzeug 203 angeordnet sind, und mittels eines Zugfahrzeug-Parkbremskreises 240 pneumatisch mit diesen verbunden. Die zweite Feststellbrems-Ventileinheit 24.2 ist einer zweiten Anzahl zwei von Federspeicher Bremszylindern 442 zugeordnet, die im Anhänger 204 angeordnet sind, und mittels eines Anhänger-Parkbremskreises 242 pneumatisch mit diesen verbunden.

Die erste Feststellbrems-Ventileinheit 24.1 und die zweite Feststellbrems-Ventileinheit 24.2 sind jeweils signalführend mit einer ersten Steuereinheit 410, die dem Feststellbremssystem 520 zugeordnet ist, verbunden.

In bevorzugten Ausführungsformen ist die erste Feststellbrems-Ventileinheit 24.1 und die zweite Feststellbrems-Ventileinheit 24.2, wie hier gestrichelt angedeutet, als gemeinsame, mehrkanalige Feststellbrems-Ventileinheit 24.3 ausgebildet

Die Notlöse-Ventileinheiten 1.1, 1.2 sind jeweils signalführend mit einer weiteren Steuereinheit 420, die vorliegend einem Betriebsbremssystem 510 zugeordnet ist, verbunden. Die weitere Steuereinheit 420 ist ausgebildet, der ersten Feststellbrems-Ventileinheit 24.1 ein elektronisches Fahrzeug-Notlöse-Signal SNA bereitzustellen. Die weitere Steuereinheit 420 ist weiterhin ausgebildet, der zweiten Feststellbrems-Ventileinheit 24.2 ein elektronisches Anhänger-Notlöse-Signal SNB bereitzustellen. Durch das Bereitstellen des elektronischen Fahrzeug-Notlöse-Signals SNA und des elektronischen Anhänger-Notlöse-Signals SNB können sämtliche Federspeicherbremszylinder 442 gelöst und ein fahrbereiter Zustand des Fahrzeugs 200 hergestellt werden.

### Bezugszeichenliste (Teil der Beschreibung)

- 1: Notlöse-Ventileinheit
- 1.1, 1.2: erste, zweite Notlöse-Ventileinheit
- 3: Entlüftungsanschluss
- 6: erster Druckluftvorrat
- 7: zweiter Druckluftvorrat
- 8,8': Vorsteuereinheit
- 18: Hauptventil
- 18.2: zweiter Hauptanschluss
- 18.3: Steueranschluss des Hauptventils
- 20: Relaisventil
- 21: Federspeicheranschluss
- 24: Feststellbrems-Ventileinheit
- 24.1, 24.2: erste, zweite Feststellbrems-Ventileinheit
- 26: Hauptanschluss der Notlöse-Ventileinheit
- 27: Betriebsbrems-Anschluss der Notlöse-Ventileinheit
- 24.3: gemeinsame Feststellbrems-Ventileinheit
- 29: Vorratsanschluss der Notlöse-Ventileinheit
- 34: Hauptventileinheit
- 36: Baueinheit
- 37: Notlöse-Modul
- 38: Zusatz-Bremsdruckanschluss
- 39: Feststellbremsmodul
- 41: erstes Vorsteuerventil
- 41A: Öffnungsstellung des ersten Vorsteuerventils
- 41B: Sperrstellung des ersten Vorsteuerventils
- 42: zweites Vorsteuerventil
- 42A: Öffnungsstellung des zweiten Vorsteuerventils
- 42B: Sperrstellung des zweiten Vorsteuerventils
- 44: Entlüftungsleitung
- 47, 47': Vorsteuerpfad
- 49: Vorrats-Wechselventil
- 64: Drucksensor
- 67: erste Drossel
- 68: zweite Drossel
- 70: Vorratsdruckpfad
- 72: Bistabilventil
- 74: Vorratszweig
- 76: Steuerzweig
- 80: Kompensationsventil
- 80A: erste Schaltstellung des Kompensationsventils
- 80B: zweite Schaltstellung des Kompensationsventils
- 80.1: erster Kompensationsventilanschluss
- 80.2: zweiter Kompensationsventilanschluss
- 80.3: dritter Kompensationsventilanschluss
- 81: 3/2-Wegeventil
- 82: Anti-Compound-Anschluss
- 83: Kompensationssteuerpfad
- 84: Notlöseanschluss
- 80.4: Kompensationsventil-Steueranschluss
- 85: Rückschlagventil
- 86: Kompensationspfad
- 88: Auswahlventil
- 88.1: erster Auswahlventilanschluss
- 88.2: zweiter Auswahlventilanschluss
- 88.3: dritter Auswahlventilanschluss
- 94: Notlöse-Drucksensor
- 99: elektronische Steuereinheit
- 120: 3/2-Wegeventil
- 120A: erste Notlöse-Ventilstellung des 3/2-Wegeventils
- 120B: zweite Notlöse-Ventilstellung des 3/2-Wegeventils
- 120.1: erster Notlöse-Ventilanschluss des 3/2-Wegeventils
- 120.2: zweiter Notlöse-Ventilanschluss des 3/2-Wegeventils
- 120.3: Notlöse-Entlüftungsanschluss des 3/2-Wegeventils
- 120.4: Steueranschluss des 3/2-Wegeventils
- 122: 3/2-Wege-Magnetventil
- 130: Notlöse-Vorsteueranordnung
- 131: Notlöse-Vorsteuerpfad der Notlöse-Vorsteueranordnung
- 132: Vorsteuerventil der Notlöse-Vorsteueranordnung
- 132A: erste Ventilstellung des Vorsteuerventils
- 132B: zweite Ventilstellung des Vorsteuerventils
- 132.1: erster Vorsteuerventil-Anschluss
- 132.2: zweiter Vorsteuerventil-Anschluss
- 132.3: Entlüftungsanschluss des Vorsteuerventils
- 133: 2/2-Wegeventil, als 2/2-Wegeventil ausgebildetes Vorsteuerventil
- 134: 2/2-Wege-Magnetventil, als 2/2-Wege-Magnetventil ausgebildetes Vorsteuerventil
- 135: 3/2-Wegeventil, als 3/2-Wegeventil ausgebildetes Vorsteuerventil
- 136: 3/2-Wege-Magnetventil, als 3/2-Wege-Magnetventil ausgebildetes Vorsteuerventil
- 137: Halteventil
- 137A: erste Ventilstellung des Halteventils
- 137B: zweite Ventilstellung des Halteventils
- 138: 2/2-Wegeventil, als 2/2-Wegeventil ausgebildetes Halteventil
- 139: 2/2-Wege-Magnetventil, als 2/2-Wege-Magnetventil ausgebildetes Halteventil
- 140: Notlöse-Hauptventilanordnung
- 141: Hauptpfad der Notlöse-Hauptventilanordnung
- 142: Hauptventil der Notlöse-Hauptventilanordnung
- 142A: erste Hauptventil-Ventilstellung
- 142B: zweite Hauptventil-Ventilstellung
- 142.1: erster Hauptventilanschluss
- 142.2: zweiter Hauptventilanschluss
- 142.3: Hauptventil-Entlüftungsanschluss
- 142.4: Hauptventil-Steueranschluss
- 143: 3/2-Wegeventil, als 3/2-Wegeventil ausgebildetes Hauptventil
- 150: Selbsthaltepfad, Selbsthaltepfad der Notlöse-Hauptventilanordnung
- 200: Fahrzeug
- 201: Nutzfahrzeug
- 202: elektropneumatisches Bremssystem
- 203: Zugfahrzeug
- 204: Anhänger
- 206: Zuggespann
- 221: Vorderrad
- 222: Hinterrad
- 240: Zugfahrzeug-Parkbremskreis
- 242: Anhänger-Parkbremskreis
- 410: erste Steuereinheit
- 420: weitere Steuereinheit
- 421: Betriebsbrems-Steuereinheit
- 442: Federspeicherbremszylinder
- 444: Betriebsbremskammer
- 445: Betriebsbremszylinder
- 446: Kombinationsbremszylinder
- 480: Zentralmodul
- 484: Achsmodulators
- 486: Betriebsbremsdruck-Anschluss
- 510: Betriebsbremssystem
- 520: Feststellbremssystem
- 780: erste Energieversorgung
- 782: zweite Energieversorgung
- E: Energie
- FA: Ausnahmefehler
- FS: Stromausfall
- M1, M2: erste, zweite Anzahl von Federspeicherbremszylindern
- pB: Betriebsbremsdruck
- pN: Notlösedruck
- pNV: Notlöse-Vorsteuerdruck
- pPB: Feststellbremsdruck
- pSV: Vorsteuerdruck
- pSZ: Zusatz-Feststellbremsdruck
- pV: Vorratsdruck
- S: Fahrzeug-Notlöse-Signals
- SF: elektronisches Feststellbremssignal
- SF1, SF2: erstes, zweites elektronisches Feststellbremssignal
- SN: elektronisches Notlöse-Signal
- SN1, SN2: erstes, zweites elektronisches Notlöse-Signal
- SNA: Fahrzeug-Notlöse-Signal
- SNB: Anhänger-Notlöse-Signal
- SPN: Notlösedrucksignal

## Patentansprüche

1. Elektropneumatisches Bremssystem (202) für ein Fahrzeug (200), vorzugsweise ein Nutzfahrzeug (201), aufweisend:
ein Feststellbremssystem (520) mit einer Feststellbrems-Ventileinheit (24), die zum Aussteuern eines Feststellbremsdrucks (pPB) an wenigstens einem Federspeicheranschluss (21) in Abhängigkeit eines Vorsteuerdrucks (pSV) ausgebildet ist, wobei
die Feststellbrems-Ventileinheit (24) eine Vorsteuereinheit (8) aufweist, die in Abhängigkeit eines elektronischen Feststellbremssignals (SF) den Vorsteuerdruck (pSV) an einen Vorsteuerpfad (47) aussteuert,
wobei die Feststellbrems-Ventileinheit (24) einen Zusatz-Bremsdruckanschluss (38) aufweist, der pneumatisch mit dem Vorsteuerpfad (47) verbunden oder verbindbar ist zum Einsteuern eines Notlösedrucks (pN), wobei das Einsteuern des Notlösedrucks (pN) am Zusatz-Bremsdruckanschluss (38) das Aussteuern des Feststellbremsdrucks (pPB) am wenigstens einen Federspeicheranschluss (21) bewirkt, und
eine erste Steuereinheit (410), die zum Bereitstellen des elektronischen Feststellbremssignals (SF) an die Feststellbrems-Ventileinheit (24) ausgebildet ist,
**gekennzeichnet durch**
eine Notlöse-Ventileinheit (1), die ausgebildet ist, einen von einem Betriebsbremssystem (510) bereitgestellten, für eine Betriebsbremsung (BB) wirksamen Betriebsbremsdruck (pB) oder einen von dem Betriebsbremsdruck (pB) abgeleiteten Druck (pB') zu empfangen und
in Abhängigkeit eines empfangenen elektronischen Notlöse-Signals (SN) einen Notlösedruck (pN) am Zusatz-Bremsdruckanschluss (38) bereitzustellen.

2. Elektropneumatisches Bremssystem (202) nach Anspruch 1, **dadurch gekennzeichnet, dass**
das elektronische Notlöse-Signal (SN) von einer weiteren Steuereinheit (420) bereitgestellt wird.

3. Elektropneumatisches Bremssystem (202) nach Anspruch 2, **dadurch gekennzeichnet, dass**
die weitere Steuereinheit (420) eine dem Betriebsbremssystem (510) zugeordnete Betriebsbrems-Steuereinheit (421) ist.

4. Elektropneumatisches Bremssystem (202) nach Anspruch 2 oder 3, **dadurch gekennzeichnet, dass**
die erste Steuereinheit (410) von einer ersten Energieversorgung (780) mit elektrischer Energie (E) versorgt wird, und die weitere Steuereinheit (420) von einer zweiten Energieversorgung (782), die von der ersten Energieversorgung (780) unabhängig ist, mit elektrischer Energie (E) versorgt wird.

5. Elektropneumatisches Bremssystem (202) nach einem der vorherigen Ansprüche, **gekennzeichnet durch**
einen Notlöse-Drucksensor (94), der ausgebildet ist zum Ermitteln des von der Notlöse-Ventileinheit (1) bereitgestellten Notlösedrucks (pN).

6. Elektropneumatisches Bremssystem (202) nach einem der vorherigen Ansprüche, **dadurch gekennzeichnet, dass**
die Vorsteuereinheit (8) pneumatisch selbsthaltend ausgebildet ist.

7. Elektropneumatisches Bremssystem (202) nach einem der vorherigen Ansprüche, **dadurch gekennzeichnet, dass**
die Notlöse-Ventileinheit (1) ein 3/2-Wegeventil (120), bevorzugt ein 3/2-Wege-Magnetventil (122), aufweist mit einem ersten Notlöse-Ventilanschluss (120.1) zum Bereitstellen des Notlösedrucks (pN), einem zweiten Notlöse-Ventilanschluss (120.2) zum Empfangen des Betriebsbremsdrucks (pB) oder des von dem Betriebsbremsdruck (pB) abgeleiteten Drucks (pB') und einem dritten Notlöse-Entlüftungsanschluss (120.3),
wobei das 3/2-Wegeventil (120) in einer ersten Notlöse-Ventilstellung (120A) den ersten Notlöse-Ventilanschluss (120.1) pneumatisch mit dem zweiten Notlöse-Ventilanschluss (120.2) verbindet, und in einer zweiten Notlöse-Ventilstellung (120B) den ersten Notlöse-Ventilanschluss (120.1) pneumatisch mit dem Notlöse-Entlüftungsanschluss (120.3) verbindet.

8. Elektropneumatisches Bremssystem (202) nach einem der Ansprüche 1 bis 6, **dadurch gekennzeichnet, dass**
die Notlöse-Ventileinheit (1) eine Notlöse-Vorsteueranordnung (130) aufweist, die in Abhängigkeit des elektronischen Notlöse-Signals (SN) den Betriebsbremsdruck (pB) oder den von dem Betriebsbremsdruck (pB) abgeleiteten Druck (pB') als Notlöse-Vorsteuerdruck (pNV) aussteuert, und
eine Notlöse-Hauptventilanordnung (140) mit einem pneumatisch schaltbaren Hauptventil (142) aufweist, die in Abhängigkeit des Notlöse-Vorsteuerdrucks (pNV) einen Vorratsdruck (pV) als den Notlösedruck (pN) am Hauptanschluss (26) aussteuert.

9. Elektropneumatisches Bremssystem (202) nach Anspruch 8, **dadurch gekennzeichnet, dass**
die Notlöse-Ventileinheit (1) einen pneumatischen Selbsthaltepfad (150) aufweist, der einen Hauptventil-Steueranschluss (142.4) des Hauptventils (142) mit dem Hauptanschluss (26) und/oder einem ersten Hauptventilanschluss (142.1) des Hauptventils (142) pneumatisch verbindet.

10. Elektropneumatisches Bremssystem (202) nach Anspruch 8 oder 9, **dadurch gekennzeichnet, dass**
die Notlöse-Vorsteueranordnung (130) ein Vorsteuerventil (132) aufweist, das mittels des elektronischen Notlöse-Signals (SN) steuerbar ist.

11. Elektropneumatisches Bremssystem (202) nach einem der Ansprüche 8 bis 10, **dadurch gekennzeichnet, dass**
die Notlöse-Vorsteueranordnung (130) ein Halteventil (137) aufweist, das zum selektiven Halten des Notlöse-Vorsteuerdrucks (pNV) in Abhängigkeit des Notlöse-Signals (SN) ausgebildet ist.

12. Elektropneumatisches Bremssystem (202) nach einem der vorherigen Ansprüche, **dadurch gekennzeichnet, dass**
die Notlöse-Ventileinheit (1) in der Feststellbrems-Ventileinheit (24) angeordnet oder mit der Feststellbrems-Ventileinheit (24) zu einer Baueinheit (36) zusammengefasst ist oder als eigenständiges Notlöse-Modul (23) ausgebildet ist.

13. Fahrzeug (200), vorzugsweise Nutzfahrzeug (201), aufweisend
ein elektropneumatisches Bremssystem (202) nach einem der vorherigen Ansprüche, wobei das elektropneumatische Bremssystem (202) ein Betriebsbremssystem (510) umfasst.

14. Fahrzeug (200) nach Anspruch 13, wobei das Fahrzeug (200) ein Zuggespann (206) mit einem als Nutzfahrzeug (201) ausgebildeten Zugfahrzeug (203) und einem Anhänger (204) ist, **dadurch gekennzeichnet, dass**
das elektropneumatische Bremssystem (202) eine erste Notlöse-Ventileinheit (1.1) aufweist, die einer ersten Feststellbrems-Ventileinheit (24.1) für einen Zugfahrzeug-Parkbremskreis (220) des Zugfahrzeugs (203) zugeordnet ist und in Abhängigkeit eines elektronischen Fahrzeug-Notlöse-Signals (SNA) schaltbar ist, und
eine zweite Notlöse-Ventileinheit (1.2) aufweist, die einer zweiten Feststellbrems-Ventileinheit (24.2) für einen Anhänger-Parkbremskreis (222) des Anhängers (204) zugeordnet ist und in Abhängigkeit eines elektronischen Anhänger-Notlöse-Signals (SNB) schaltbar ist.

15. Verfahren zum Betreiben eines elektropneumatischen Bremssystems (202) mit einer Notlöse-Ventileinheit (1) nach einem der Ansprüche 1 bis 12, aufweisend die Schritte:
Empfangen durch die Notlöse-Ventileinheit (1) eines für eine Betriebsbremsung (BB) wirksamen Betriebsbremsdrucks (pB) oder eines von dem Betriebsbremsdruck (pB) abgeleiteten Drucks (pB'),
Bereitstellen eines elektronischen Notlöse-Signals (SN), und
Empfangen des elektronischen Notlöse-Signals (SN) durch die Notlöse-Ventileinheit (1),
Bereitstellen eines Notlösedrucks (pN) durch die Notlöse-Ventileinheit (1) in Abhängigkeit des empfangenen elektronischen Notlöse-Signals (SN), der für wenigstens einen Federspeicherbremszylinder (442) wirksam ist,
Empfangen des Notlösedrucks (pN) durch eine Feststellbrems-Ventileinheit (24).

16. Verwendung einer Notlöse-Ventileinheit (1) in einem elektropneumatischen Bremssystem (202), wobei
das elektropneumatische Bremssystem (202) ein Feststellbremssystem (520) mit einer Feststellbrems-Ventileinheit (24) aufweist, die zum Aussteuern eines Feststellbremsdrucks (pPB) an wenigstens einem Federspeicheranschluss (21) in Abhängigkeit eines Vorsteuerdrucks (pSV) ausgebildet ist, wobei
die Feststellbrems-Ventileinheit (24) eine Vorsteuereinheit (8) aufweist, die in Abhängigkeit eines elektronischen Feststellbremssignals (SF) den Vorsteuerdruck (pSV) an einen Vorsteuerpfad (47) aussteuert, wobei
die Feststellbrems-Ventileinheit (24) einen Zusatz-Bremsdruckanschluss (38) aufweist, der pneumatisch mit dem Vorsteuerpfad (47) verbunden oder verbindbar ist zum Einsteuern eines Notlösedrucks (pN), wobei das Einsteuern des Notlösedrucks (pN) am Zusatz-Bremsdruckanschluss (38) das Aussteuern des Feststellbremsdrucks (pPB) am wenigstens einen Federspeicheranschluss (21) bewirkt, und
eine erste Steuereinheit (410) aufweist, die zum Bereitstellen des elektronischen Feststellbremssignals (SF) an die Feststellbrems-Ventileinheit (24) ausgebildet ist, wobei
die Notlöse-Ventileinheit (1) einen von einem Betriebsbremssystem (510) bereitgestellten, für eine Betriebsbremsung (BB) wirksamen Betriebsbremsdruck (pB) oder einen von dem Betriebsbremsdruck (pB) abgeleiteten Druck (pB') empfängt und in Abhängigkeit eines empfangenen elektronischen Notlöse-Signals (SN) einen Notlösedruck (pN) am Zusatz-Bremsdruckanschluss (38) bereitstellt.

## Claims

1. Electropneumatic brake system (202) for a vehicle (200), preferably a commercial vehicle (201), comprising:
a parking brake system (520) which has a parking brake valve unit (24) designed to adjust a parking brake pressure (pPB) at at least one spring-loaded connection (21) on the basis of a pilot control pressure (pSV), wherein
the parking brake valve unit (24) comprises a pilot control unit (8) which, on the basis of an electronic parking brake signal (SF), adjusts the pilot control pressure (pSV) on a pilot control path (47),
wherein the parking brake valve unit (24) has an additional brake pressure connection (38) which is pneumatically connected or connectable to the pilot control path (47) for introducing an emergency-release pressure (pN), wherein the introduction of the emergency-release pressure (pN) at the additional brake pressure connection (38) effects the adjustment of the parking brake pressure (pPB) at at least one spring-loaded connection (21), and
a first control unit (410) designed to provide the electronic parking brake signal (SF) to the parking brake valve unit (24),
**characterized by**
an emergency-release valve unit (1) which is designed to receive a service brake pressure (pB), provided by a service brake system (510) and effective for a service braking process (BB), or a pressure (pB') derived from the service brake pressure (pB), and
to provide an emergency-release pressure (pN) at the additional brake pressure connection (38) on the basis of a received electronic emergency-release signal (SN).

2. Electropneumatic brake system (202) according to claim 1, **characterized in that**
the electronic emergency-release signal (SN) is provided by a further control unit (420).

3. Electropneumatic brake system (202) according to claim 2,
**characterized in that**
the further control unit (420) is a service brake control unit (421) assigned to the service brake system (510).

4. Electropneumatic brake system (202) according to claim 2 or 3,
**characterized in that**
the first control unit (410) is supplied with electrical energy (E) by a first energy supply (780), and the further control unit (420) is supplied with electrical energy (E) by a second energy supply (782) which is independent of the first energy supply (780).

5. Electropneumatic brake system (202) according to any of the preceding claims, **characterized by**
an emergency-release pressure sensor (94) which is designed to determine the emergency-release pressure (pN) provided by the emergency-release valve unit (1).

6. Electropneumatic brake system (202) according to any of the preceding claims, **characterized in that**
the pilot control unit (8) is designed to be pneumatically self-holding.

7. Electropneumatic brake system (202) according to any of the preceding claims, **characterized in that**
the emergency-release valve unit (1) comprises a 3/2-way valve (120), preferably a 3/2-way solenoid valve (122), which has a first emergency-release valve connection (120.1) for providing the emergency-release pressure (pN), a second emergency-release valve connection (120.2) for receiving the service brake pressure (pB) or the pressure (pB') derived from the service brake pressure (pB), and a third emergency-release ventilation connection (120.3),
wherein, in a first emergency-release valve position (120A), the 3/2-way valve (120) pneumatically connects the first emergency-release valve connection (120.1) to the second emergency-release valve connection (120.2), and, in a second emergency-release valve position (120B), pneumatically connects the first emergency-release valve connection (120.1) to the emergency-release ventilation connection (120.3).

8. Electropneumatic brake system (202) according to any of claims 1 to 6, **characterized in that**
the emergency-release valve unit (1) comprises an emergency-release pilot control arrangement (130) which, on the basis of the electronic emergency-release signal (SN), adjusts the service brake pressure (pB) or the pressure (pB') derived from the service brake pressure (pB) as emergency-release pilot control pressure (pNV), and
comprises an emergency-release main valve arrangement (140) which has a pneumatically switchable main valve (142) and which, on the basis of the emergency-release pilot control pressure (pNV), adjusts a supply pressure (pV) as the emergency-release pressure (pN) at the main connection (26).

9. Electropneumatic brake system (202) according to claim 8,
**characterized in that**
the emergency-release valve unit (1) comprises a pneumatic self-holding path (150) which pneumatically connects a main valve control connection (142.4) of the main valve (142) to the main connection (26) and/or a first main valve connection (142.1) of the main valve (142).

10. Electropneumatic brake system (202) according to claim 8 or 9,
**characterized in that**
the emergency-release pilot control arrangement (130) comprises a pilot control valve (132) which can be controlled by means of the electronic emergency-release signal (SN).

11. Electropneumatic brake system (202) according to any of claims 8 to 10, **characterized in that**
the emergency-release pilot control arrangement (130) comprises a holding valve (137) which is designed to selectively hold the emergency-release pilot control pressure (pNV) on the basis of the emergency-release signal (SN).

12. Electropneumatic brake system (202) according to any of the preceding claims, **characterized in that**
the emergency-release valve unit (1) is arranged in the parking brake valve unit (24), or is combined with the parking brake valve unit (24) to form a modular unit (36), or is designed as an independent emergency-release module (23).

13. Vehicle (200), preferably commercial vehicle (201), comprising
an electropneumatic brake system (202) according to any of the preceding claims, wherein the electropneumatic brake system (202) comprises a service brake system (510).

14. Vehicle (200) according to claim 13, wherein the vehicle (200) is a tractor arrangement (206) which has a towing vehicle (203), in the form of a commercial vehicle (201), and a trailer (204), **characterized in that**
the electropneumatic brake system (202) comprises a first emergency-release valve unit (1.1) which is assigned to a first parking brake valve unit (24.1) for a towing vehicle parking brake circuit (220) of the towing vehicle (203) and is switchable on the basis of an electronic vehicle emergency-release signal (SNA), and
comprises a second emergency-release valve unit (1.2) which is assigned to a second parking brake valve unit (24.2) for a trailer parking-brake circuit (222) of the trailer (204) and is switchable on the basis of an electronic trailer emergency-release signal (SNB).

15. Method for operating an electropneumatic brake system (202) comprising an emergency-release valve unit (1) according to any of claims 1 to 12, comprising the steps of:
receiving, via the emergency-release valve unit (1), a service brake pressure (pB) effective for a service brake (BB) or a pressure (pB') derived from the service brake pressure (pB),
providing an electronic emergency-release signal (SN), and
receiving the electronic emergency-release signal (SN) via the emergency-release valve unit (1),
providing an emergency-release pressure (pN) via the emergency-release valve unit (1) on the basis of the received electronic emergency-release signal (SN), which pressure is effective for at least one spring-loaded brake cylinder (442),
receiving the emergency-release pressure (pN) via a parking brake valve unit (24).

16. Use of an emergency-release valve unit (1) in an electropneumatic brake system (202), wherein
the electropneumatic brake system (202) comprises a parking brake system (520) having a parking brake valve unit (24) which is designed to adjust a parking brake pressure (pPB) at at least one spring-loaded connection (21) on the basis of a pilot control pressure (pSV), wherein
the parking brake valve unit (24) comprises a pilot control unit (8) which, on the basis of an electronic parking brake signal (SF), adjusts the pilot control pressure (pSV) on a pilot control path (47), wherein
the parking brake valve unit (24) comprises an additional brake pressure connection (38) which is pneumatically connected or connectable to the pilot control path (47) for introducing an emergency-release pressure (pN), wherein the introduction of the emergency-release pressure (pN) at the additional brake pressure connection (38) effects the adjustment of the parking brake pressure (pPB) at at least one spring-loaded connection (21), and
comprises a first control unit (410) which is designed to provide the electronic parking brake signal (SF) to the parking brake valve unit (24), wherein
the emergency-release valve unit (1) receives a service brake pressure (pB) which is provided by a service brake system (510) and is effective for a service brake (BB), or a pressure (pB') derived from the service brake pressure (pB) and, on the basis of a received electronic emergency-release signal (SN), provides an emergency-release pressure (pN) at the additional brake pressure connection (38).

## Revendications

1. Système de freinage électropneumatique (202) pour un véhicule (200), de préférence un véhicule utilitaire (201), présentant:
un système de freinage de stationnement (520) comportant une unité à soupape de freinage de stationnement (24) configurée pour régler une pression de freinage de stationnement (pPB) sur au moins un raccord d'accumulateur à ressort (21) en fonction d'une pression pilote (pSV), dans lequel
l'unité à soupape de freinage de stationnement (24) présente une unité pilote (8) qui, en fonction d'un signal électronique de freinage de stationnement (SF), règle la pression pilote (pSV) au niveau d'une voie pilote (47),
dans lequel l'unité à soupape de freinage de stationnement (24) présente un raccord de pression de freinage supplémentaire (38) qui est relié ou peut être relié pneumatiquement à la voie pilote (47) pour la commande d'une pression de desserrage d'urgence (pN), dans lequel la commande de la pression de desserrage d'urgence (pN) au niveau du raccord de pression de freinage supplémentaire (38) provoque le réglage de la pression de freinage de stationnement (pPB) au niveau d'au moins un raccord d'accumulateur à ressort (21), et
une première unité de commande (410) configurée pour fournir le signal électronique de freinage de stationnement (SF) à l'unité à soupape de freinage de stationnement (24),
**caractérisé par**
une unité à soupape de desserrage d'urgence (1) conçue pour recevoir une pression de freinage de service (pB) fournie par un système de freinage de service (510) et agissant sur un freinage de service (BB) ou une pression (pB') déduite de la pression de freinage de service (pB) et
pour fournir, en fonction d'un signal électronique de desserrage d'urgence (SN) reçu, une pression de desserrage d'urgence (pN) au niveau du raccord de pression de freinage supplémentaire (38).

2. Système de freinage électropneumatique (202) selon la revendication 1,
**caractérisé en ce que**
le signal électronique de desserrage d'urgence (SN) est fourni par une autre unité de commande (420).

3. Système de freinage électropneumatique (202) selon la revendication 2,
**caractérisé en ce que**
l'autre unité de commande (420) est une unité de commande de freinage de service (421) associée au système de freinage de service (510).

4. Système de freinage électropneumatique (202) selon la revendication 2 ou 3, **caractérisé en ce que**
la première unité de commande (410) est alimentée en énergie électrique (E) par une première alimentation en énergie (780), et l'autre unité de commande (420) est alimentée en énergie électrique (E) par une seconde alimentation en énergie (782) indépendante de la première alimentation en énergie (780).

5. Système de freinage électropneumatique (202) selon l'une des revendications précédentes, **caractérisé par**
un capteur de pression de desserrage d'urgence (94) configuré pour déterminer la pression de desserrage d'urgence (pN) fournie par l'unité à soupape de desserrage d'urgence (1).

6. Système de freinage électropneumatique (202) selon l'une des revendications précédentes, **caractérisé en ce que**
l'unité pilote (8) est configurée de manière à s'auto-entretenir pneumatiquement.

7. Système de freinage électropneumatique (202) selon l'une des revendications précédentes, **caractérisé en ce que**
l'unité à soupape de desserrage d'urgence (1) présente une soupape à 3/2 voies (120), de préférence une soupape électromagnétique à 3/2 voies (122), comportant un premier raccord de soupape de desserrage d'urgence (120.1) permettant de fournir la pression de desserrage d'urgence (pN), un deuxième raccord de soupape de desserrage d'urgence (120.2) permettant de recevoir la pression de freinage de service (pB) ou la pression (pB') déduite de la pression de freinage de service (pB) et un troisième raccord d'évacuation d'air de desserrage d'urgence (120.3),
dans lequel la soupape à 3/2 voies (120) relie pneumatiquement le premier raccord de soupape de desserrage d'urgence (120.1) au deuxième raccord de soupape de desserrage d'urgence (120.2) dans une première position de soupape de desserrage d'urgence (120A), et relie pneumatiquement le premier raccord de soupape de desserrage d'urgence (120.1) au raccord d'évacuation d'air de desserrage d'urgence (120.3) dans une seconde position de soupape de desserrage d'urgence (120B).

8. Système de freinage électropneumatique (202) selon l'une des revendications 1 à 6, **caractérisé en ce que**
l'unité à soupape de desserrage d'urgence (1) présente un dispositif pilote de desserrage d'urgence (130) qui, en fonction du signal électronique de desserrage d'urgence (SN), règle la pression de freinage de service (pB) ou la pression (pB') déduite de la pression de freinage de service (pB) comme pression pilote de desserrage d'urgence (pNV), et
présente un dispositif à soupape principale de desserrage d'urgence (140) comportant une soupape principale (142) commutable pneumatiquement qui, en fonction de la pression pilote de desserrage d'urgence (pNV), règle une pression de réserve (pV) comme pression de desserrage d'urgence (pN) au niveau du raccord principal (26).

9. Système de freinage électropneumatique (202) selon la revendication 8, **caractérisé en ce que**
l'unité à soupape de desserrage d'urgence (1) présente une voie d'auto-entretien (150) pneumatique qui relie pneumatiquement un raccord de commande de soupape principale (142.4) de la soupape principale (142) au raccord principal (26) et/ou à un premier raccord de soupape principale (142.1) de la soupape principale (142).

10. Système de freinage électropneumatique (202) selon la revendication 8 ou 9, **caractérisé en ce que**
le dispositif pilote de desserrage d'urgence (130) présente une soupape pilote (132) qui peut être commandée au moyen du signal électronique de desserrage d'urgence (SN).

11. Système de freinage électropneumatique (202) selon l'une des revendications 8 à 10, **caractérisé en ce que**
le dispositif pilote de desserrage d'urgence (130) présente une soupape de maintien (137) configurée pour maintenir sélectivement la pression pilote de desserrage d'urgence (pNV) en fonction du signal de desserrage d'urgence (SN).

12. Système de freinage électropneumatique (202) selon l'une des revendications précédentes, **caractérisé en ce que**
l'unité à soupape de desserrage d'urgence (1) est disposée dans l'unité à soupape de freinage de stationnement (24) ou est regroupée avec l'unité à soupape de freinage de stationnement (24) en une unité structurale (36) ou est réalisée sous forme de module de desserrage d'urgence (23) autonome.

13. Véhicule (200), de préférence véhicule utilitaire (201), présentant
un système de freinage électropneumatique (202) selon l'une des revendications précédentes, dans lequel le système de freinage électropneumatique (202) comprend un système de freinage de service (510).

14. Véhicule (200) selon la revendication 13, dans lequel le véhicule (200) est une combinaison de remorquage (206) comportant un véhicule tracteur (203) réalisé sous forme de véhicule utilitaire (201) et une remorque (204), **caractérisé en ce que**
le système de freinage électropneumatique (202) présente une première unité à soupape de desserrage d'urgence (1.1) associée à une première unité à soupape de freinage de stationnement (24.1) pour un circuit de freinage de stationnement de véhicule tracteur (220) du véhicule tracteur (203) et commutable en fonction d'un signal électronique de desserrage d'urgence de véhicule (SNA), et
présente une seconde unité à soupape de desserrage d'urgence (1.2) associée à une seconde unité à soupape de freinage de stationnement (24.2) pour un circuit de freinage de stationnement de remorque (222) de la remorque (204) et commutable en fonction d'un signal électronique de desserrage d'urgence de remorque (SNB).

15. Procédé permettant de faire fonctionner un système de freinage électropneumatique (202) comportant une unité à soupape de desserrage d'urgence (1) selon l'une des revendications 1 à 12, présentant les étapes consistant à :
recevoir, par l'unité à soupape de desserrage d'urgence (1), une pression de freinage de service (pB) agissant sur un freinage de service (BB) ou une pression (pB') déduite de la pression de freinage de service (pB),
fournir un signal électronique de desserrage d'urgence (SN), et
recevoir, par l'unité à soupape de desserrage d'urgence (1), le signal électronique de desserrage d'urgence (SN),
fournir, par l'unité à soupape de desserrage d'urgence (1), une pression de desserrage d'urgence (pN) en fonction du signal électronique de desserrage d'urgence (SN) reçu agissant sur au moins un cylindre de freinage à accumulateur à ressort (442),
recevoir, par une unité à soupape de freinage de stationnement (24), la pression de desserrage d'urgence (pN).

16. Utilisation d'une unité à soupape de desserrage d'urgence (1) dans un système de freinage électropneumatique (202), dans laquelle
le système de freinage électropneumatique (202) présente un système de freinage de stationnement (520) comportant une unité à soupape de freinage de stationnement (24) configurée pour régler une pression de freinage de stationnement (pPB) au niveau d'au moins un raccord d'accumulateur à ressort (21) en fonction d'une pression pilote (pSV), dans laquelle
l'unité à soupape de freinage de stationnement (24) présente une unité pilote (8) qui, en fonction d'un signal électronique de freinage de stationnement (SF), règle la pression pilote (pSV) au niveau d'une voie pilote (47), dans laquelle
l'unité à soupape de freinage de stationnement (24) présente un raccord de pression de freinage supplémentaire (38) qui est relié ou peut être relié pneumatiquement à la voie pilote (47) pour la commande d'une pression de desserrage d'urgence (pN), dans laquelle la commande de la pression de desserrage d'urgence (pN) au niveau du raccord de pression de freinage supplémentaire (38) provoque le réglage de la pression de freinage de stationnement (pPB) au niveau d'au moins un raccord d'accumulateur à ressort (21), et
présente une première unité de commande (410) réalisée pour fournir le signal électronique de freinage de stationnement (SF) à l'unité à soupape de freinage de stationnement (24), dans laquelle
l'unité à soupape de desserrage d'urgence (1) reçoit une pression de freinage de service (pB) fournie par un système de freinage de service (510) et agissant sur un freinage de service (BB) ou une pression (pB') déduite de la pression de freinage de service (pB) et fournit une pression de desserrage d'urgence (pN) au raccord de pression de freinage supplémentaire (38) en fonction d'un signal électronique de desserrage d'urgence (SN) reçu.
